# EUROPEAN PATENT APPLICATION

(11) **EP 4 827 030 A1**
(43) Date of publication of application: **21.10.2026**
(21) Application number: 23961219.5
(22) Date of filing: 15.12.2023
(51) Int. Cl.: H04L 5/00

(54) **WIRELESS COMMUNICATION METHODS AND DEVICES**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN); XIAO, Han, Dongguan, Guangdong 523860 (CN)
(74) Representative: Penza, Giancarlo
(86) International application number: PCT/CN2023/139276
(87) International publication number: WO 2025/123363

(57) **Abstract**

The present application provides wireless communication methods and devices. A method comprises: a first device transmits multiple streams of pilot signals, wherein some or all of transmission resources occupied by the pilot signals of different streams among the multiple streams of pilot signals are different from each other, and the transmission resources occupied by the pilot signals are some or all of transmission resources occupied by transmission data.

## Description

### TECHNICAL FIELD

The present disclosure relates to the technical field of communications, and more particularly, to a method and an apparatus for wireless communication.

### BACKGROUND

In order to improve resource utilization in data transmission, a pilot signal and data can be superimposed and transmitted in a non-orthogonal manner. However, mutual interference between the pilot signal and the data may increase parsing complexity at a receiving end. Especially in a case of multi-stream pilot signals and data superimposed transmission, the receiving end may not be able to achieve efficient parsing and/or channel estimation.

### SUMMARY

The present disclosure provides a method and an apparatus for wireless communication, and various aspects of the present disclosure are described below.

In a first aspect, there is provided a wireless communication method, including: a first device transmits multi-stream pilot signals, where part or all of transmission resources occupied by pilot signals of different streams in the multi-stream pilot signals are different, and transmission resources occupied by the pilot signals are part or all of transmission resources occupied by transmission data.

In a second aspect, there is provided a wireless communication method, including: a second device transmits multi-stream pilot signals, where part or all of transmission resources occupied by pilot signals of different streams in the multi-stream pilot signals are different, and transmission resources occupied by the pilot signals are part or all of transmission resources occupied by transmission data.

In a third aspect, there is provided a wireless communication apparatus, the wireless communication apparatus is a first device and includes: a first transmission unit configured to transmit multi-stream pilot signals, where part or all of transmission resources occupied by pilot signals of different streams in the multi-stream pilot signals are different, and transmission resources occupied by the pilot signals are part or all of transmission resources occupied by transmission data.

In a fourth aspect, there is provided a wireless communication apparatus, the wireless communication apparatus is a second device and includes: a first transmission unit configured to transmit multi-stream pilot signals, where part or all of transmission resources occupied by pilot signals of different streams in the multi-stream pilot signals are different, and transmission resources occupied by the pilot signals are part or all of transmission resources occupied by transmission data.

In a fifth aspect, there is provided a wireless communication device including a memory for storing a program and a processor for calling the program from the memory to cause the device to perform some or all of operations of the method of the first aspect or the second aspect.

In a sixth aspect, there is provided a wireless communication device including a processor for invoking a program from a memory to cause the device to perform some or all of operations in the method of the first aspect or the second aspect.

In a seventh aspect, there is provided a chip including a processor for invoking a program from a memory to cause the chip to perform some or all of operations in the method of the first aspect or the second aspect.

In an eighth aspect, there is provided a computer-readable storage medium having stored thereon a program that causes a wireless communication device to perform some or all of operations in a method as in the first aspect or the second aspect.

In a ninth aspect, there is provided a computer program product, where the computer program product includes a non-transitory computer-readable storage medium storing a computer program operable to cause a communication device to perform some or all of operations in the methods of the respective aspects described above. In some implementations, the computer program product may be a software installation package.

In a tenth aspect, there is provided a computer program that causes a wireless communication device to perform some or all of operations in the method of the first aspect or the second aspect.

Different from the related art in which the multi-stream pilot signals and data are superimposed and transmitted on the same transmission resources, the embodiment of the present disclosure can superimpose and transmit part of the multi-stream pilot signals and data on the same transmission resources, that is, part or all of transmission resources occupied by pilot signals of different streams in the pilot signals of different streams are different. In this way, the number of streams of pilot signals transmitted on the same transmission resources can be reduced, and a transmission power of the pilot signals and/or data on the transmission resources can be increased, thereby helping to reduce interference between the pilot signals and the data, and improving system performance.

### BRIEF DESCRIPTION OF THE DRAWINGS

FIG. 1 is a wireless communication system to which an embodiment of the present disclosure is applied.
FIG. 2 is a schematic diagram of a neural network applicable to an embodiment of the present disclosure.
FIGS. 3A-3C are schematic diagrams of pilot patterns under different configurations.
FIG. 4 is a wireless communication system to which an embodiment of the present disclosure is applied.
FIG. 5 is a schematic flowchart of a wireless communication method provided by an embodiment of the present disclosure.
FIG. 6A is an example diagram of different time-domain resources.
FIG. 6B is an example diagram of different frequency-domain resources.
FIG. 6C is an example diagram of resources that differ in both the time and frequency domains.
FIG. 7 is an example diagram of an M-stream data and N-stream pilot signals superimposed transmission scheme.
FIG. 8 is an example diagram of a power allocation scheme for superimposed transmission of M-stream data and a single-stream pilot signal.
FIG. 9 is an example diagram of a (time-domain) resource allocation scheme for superimposed transmission of 4-stream data and 4-stream pilot signals.
FIG. 10 is an example diagram of another (time-domain) resource allocation scheme for superimposed transmission of 4-stream data and 4-stream pilot signals.
FIG. 11 is an example diagram of a (frequency-domain) resource allocation scheme for superimposed transmission of 4-stream data and 4-stream pilot signals.
FIG. 12 is an example diagram of another (frequency-domain) resource allocation scheme for superimposed transmission of 4-stream data and 4-stream pilot signals.
FIG. 13 is an example diagram of a (time-domain and frequency-domain) resource allocation scheme for superimposed transmission of 4-stream data and 4-stream pilot signals.
FIG. 14 is an example diagram of another (time-domain and frequency-domain) resource allocation scheme for superimposed transmission of 4-stream data and 4-stream pilot signals.
FIG. 15 is a schematic diagram of a wireless communication apparatus according to an embodiment of the present disclosure.
FIG. 16 is a schematic diagram of another wireless communication apparatus according to an embodiment of the present disclosure.
FIG. 17 is a schematic configuration diagram of a communication device according to an embodiment of the present disclosure.

### DETAILED DESCRIPTION

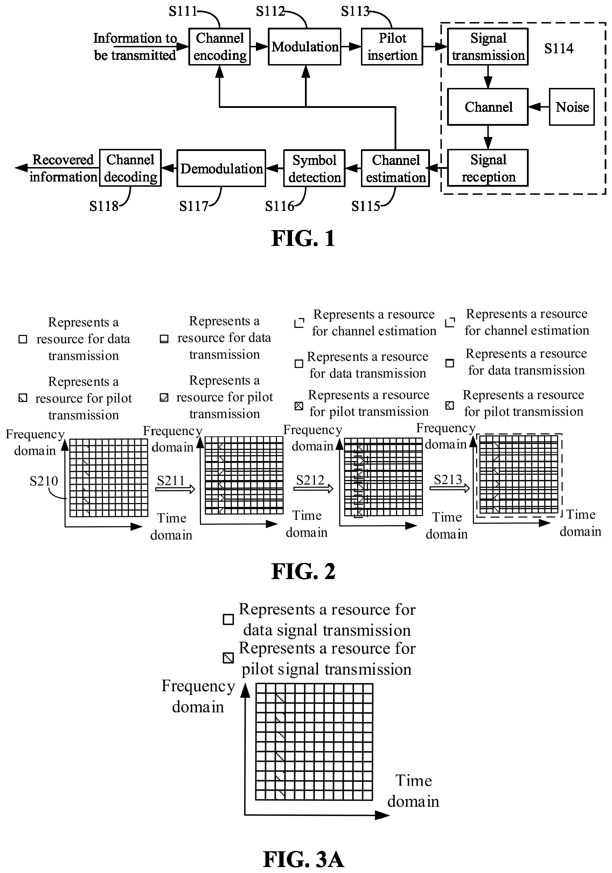

Hereinafter, technical solutions in the present disclosure will be described with reference to the accompanying drawings. In order to facilitate understanding of the present disclosure, the terms and communication processes involved in embodiments of the present disclosure will be described below with reference to FIGS. 1 to 3.

### Signal transmission process in a wireless communication system

FIG. 1 is a flowchart of a signal transmission in a wireless communication system to which an embodiment of the present disclosure is applicable. As shown in FIG. 1, the signal transmission process in the wireless communication system can be roughly divided into various signal processing procedures S111 to S118 shown in FIG. 1.

In a channel encoding process S111, a transmitter performs channel encoding on information to be transmitted to obtain an encoded bitstream. The information to be transmitted may be in a form of a bitstream.

The bitstream is modulated into modulation symbols in a modulation process S112.

In a pilot insertion process S113, a pilot symbol is inserted into the modulation symbol described above to form a signal to be transmitted. The pilot symbol can be used by a receiver for channel estimation and symbol detection.

In a signal transmission process S114, the above-described signal is carried on a channel and transmitted to the receiver. Here, noise is usually superimposed during the signal transmission through the channel.

In a channel estimation process S115, the receiver may perform channel estimation based on a reference signal to obtain channel state information-reference signal (CSI), and feed back the CSI to the transmitter through a feedback link for the transmitter to adjust channel coding, modulation, precoding, and the like.

In a symbol detection process S116, symbol detection is performed on the received modulation symbol to obtain a detection result.

In a demodulation process S117, the received modulation symbol is demodulated based on the detection result to obtain a bitstream.

In a channel decoding process S118, the bitstream is decoded to obtain recovered information, where the recovered information may be in the form of a bitstream.

It should be understood that the signal processing procedures S111 to S118 shown in FIG. 1 merely exemplify common signal processing procedures in a wireless communication system, and signal processing procedures such as resource mapping, precoding, interference cancellation, and CSI measurement may also be included in the wireless communication system. These signal processing procedures each can also be implemented by a separate artificial intelligence (AI) model. For the sake of brevity, the present disclosure will not be described again.

### Channel estimation

Due to complexity and time-varying nature of a wireless channel environment, in a wireless communication system (e.g., the wireless communication system described above), a receiver needs to recover a received signal based on a channel estimation result. FIG. 2 is a schematic diagram of channel estimation and signal recovery to which an embodiment of the present disclosure is applicable.

As shown in FIG. 2, in S210, a transmitter transmits a series of reference signals known to the receiver, such as a channel state information-reference signal (CSI-RS), a demodulation reference signal (DMRS), and the like, in addition to transmitting data signals on time-frequency resources.

In S211, the transmitter transmits the data signals and the reference signals to the transmitter through a channel.

Time-frequency resources occupied by the reference signals are different from time-frequency resources occupied by the data signals.

In S212, the receiver may perform channel estimation after receiving the reference signals. In one possible implementation, the receiver may estimate channel information of a channel through which the reference signals are transmitted using a channel estimation algorithm (e.g., least squares method (LS) channel estimation) and based on a pre-stored reference signal and the received reference signals.

In S213, the receiver may recover channel information on the full time-frequency resources using an interpolation algorithm according to channel information of a channel through which a pilot sequence is transmitted, for subsequent CSI feedback, data recovery, or the like.

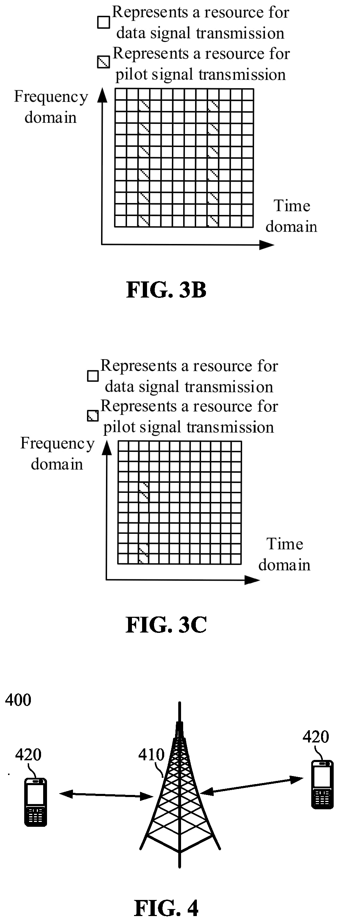

Based on the above description in connection with FIG. 2, it can be seen that the time-frequency resources for transmitting the reference signals and the time-frequency resources for transmitting the data signals are different. In addition, some communication protocols (for example, NR communication protocols) specify that a symbol for transmitting a reference signal (hereinafter simply referred to as a "pilot symbol") and a symbol for transmitting a data signal (hereinafter also referred to as a "data symbol") are different. FIG. 3 shows patterns of data symbols and pilot symbols under different configurations.

As shown in FIG. 3A, in one resource block (RB), multiple REs corresponding to pilot symbols on a symbol 2 in the RB are distributed with one subcarrier spacing. As shown in FIG. 3B, in one RB, pilot symbols occupy part of multiple symbols corresponding to symbol 2 and symbol 8 in the RB. Referring to FIG. 3C, in one RB, pilot symbols occupy multiple group of REs on symbol 2 in the RB, where each group of REs includes two consecutive transmission resource elements (REs) in the frequency domain.

Generally, among the patterns shown in FIGS. 3A to 3C, different patterns may be adapted to different communication environments. In some implementations, when a terminal device moves at a high speed and the time-varying of channel characteristics is fast, a pattern with dense pilot symbol distribution can be selected, which helps to improve the accuracy of channel quality estimation for the entire RB. For example, the pattern shown in FIG. 3B may be selected.

In other implementations, when the terminal device moves slowly and the time-varying of channel characteristics is slow, a pattern with relatively sparse pilot symbol distribution can be selected, which helps to reduce the overhead generated by transmitting the reference signal while ensuring the accuracy of channel quality estimation for the entire RB.

The communication process and terminology according to the embodiment of the present disclosure are described above with reference to FIGS. 1 to 3, and a communication system applicable to embodiments of the present disclosure is described below with reference to FIG. 4.

FIG. 4 is a wireless communication system to which an embodiment of the present disclosure is applied. The wireless communication system 400 may include a network device 410 and a terminal device 420. The network device 410 may be a device that communicates with the terminal device 420. The network device 410 may provide communication coverage for a particular geographical area and may communicate with the terminal device 420 located within the coverage area.

FIG. 4 illustrates one network device and two terminals as an example. Optionally, the wireless communication system 400 may include multiple network devices, and a coverage area of each network device may include other number of terminal devices, which is not limited in the embodiment of the present disclosure.

Optionally, the wireless communication system 400 may also include other network entities such as a network controller and a mobile management entity, which is not limited in the embodiment of the present disclosure.

It should be understood that the technical solution of the embodiment of the present disclosure can be applied to various communication systems, such as a fifth generation (5G) system or a new radio (NR) system, a long term evolution (LTE) system, an LTE frequency division duplex (FDD) system, an LTE time division duplex (TDD) system, and the like. The technical solution provided by the present disclosure can also be applied to future communication systems, such as a sixth generation mobile communication system, a satellite communication system, and the like.

The terminal device in the embodiment of the present disclosure may also be referred to as a user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent, or a user device. The terminal device in the embodiment of the present disclosure may be a device that provides voice and/or data connectivity to a user, and may be used to connect people, objects, and machines, such as a handheld device having a wireless connection function, a vehicle-mounted device, or the like. The terminal device in the embodiment of the present disclosure may be a mobile phone, a pad, a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, or the like. Alternatively, the UE may be used to act as a base station. For example, a UE may act as a scheduling entity that provides sidelink signals between UEs in V2X or D2D, etc. For example, cellular telephones and cars communicate with each other using sidelink signals. Cellular phones and smart home devices can communicate without relaying communication signals through a base station.

The network device in the embodiment of the present disclosure may be a device for communicating with a terminal device, and the network device may also be referred to as an access network device or a wireless access network device, for example, the network device may be a base station. The network device in the embodiment of the present disclosure may refer to a radio access network (RAN) node (or device) that connects a terminal device to a wireless network, a core network device, a model monitoring and management device, an operation administration and maintenance (OAM) device, or the like. The base station may broadly cover, or be replaced with, various names such as a node B (NodeB), a evolved NodeB (eNB), a next generation NodeB (gNB), a relay station, an access point, a transmitting and receiving point (TRP), a transmitting point (TP), a master eNodeB (MeNB), a secondary eNodeB (SeNB), a multi-standard radio (MSR) node, a home base station, a network controller, an access node, a radio node, an access point (AP), a transmission node, a transceiver node, a base band unit (BBU), a remote radio unit (RRU), an active antenna unit (AAU), a remote radio head (RRH), a central unit (CU), a distributed unit (DU), a centralized unit-control plane (CU-CP), a centralized unit-user plane (CU-UP) positioning node, and the like.

The base station may be a macro base station, a micro base station, a relay node, a donor node, or the like, or a combination thereof. A base station may also refer to a communication module, a modem, or a chip disposed within the aforementioned device or apparatus. The base station may also be a mobile switching center and a device that undertakes a base station function in a device-to-device (D2D), vehicle-to-everything (V2X), machine-to-machine (M2M) communication, a network-side device in a 6G network, a device that undertakes a base station function in a future communication system, or the like. The base stations may support networks of the same or different access technologies. The embodiment of the present disclosure does not limit the specific technology and the specific device form adopted by the network device. The base station may be stationary or mobile. For example, a helicopter or a drone may be configured to act as a mobile base station, and one or more cells may move according to a location of the mobile base station. In other examples, a helicopter or drone may be configured to be used as a device to communicate with another base station.

The base station may be stationary or mobile. For example, a helicopter or a drone may be configured to act as a mobile base station, and one or more cells may move according to a location of the mobile base station. In other examples, a helicopter or drone may be configured to be used as a device to communicate with another base station.

In some deployments, the network device in the embodiment of the present disclosure may refer to a CU or a DU, or the network device may include a CU and a DU. The gNB may also include an AAU.

The network device and the terminal device may be deployed on land, including indoor or outdoor, handheld or vehicle-mounted; or, it can be deployed on the water surface; or it can also be deployed on aircraft, balloons and satellites in the air. In the embodiment of the present disclosure, a scene in which the network device and the terminal device are located is not limited.

It should be understood that all or part of functions of a communication device in the present disclosure may also be implemented by software functions running on hardware, or by virtualization functions instantiated on a platform, such as a cloud platform.

The pilot signal (which may also be referred to as a reference signal) and the data may be placed orthogonally in time, frequency, and code domain resources. As a result, when the total transmission resources are constant, if a resource overhead required for the pilot signal increases, resources available for data transmission are reduced, resulting in relatively low resource utilization rate for data transmission.

The related art solves the above problems by transmitting the pilot signal and data in a non-orthogonal manner, for example, simultaneously transmitting the pilot signal and data on the same time domain and frequency domain resources. Further, advanced receivers such as artificial intelligence (AI) or machine learning (ML) receivers may be utilized to achieve efficient channel estimation from a hybrid transmission of pilot signals and data, and/or to achieve reception of data.

It should be noted that, when the above-described pilot signal and data superimposed hybrid transmission scheme is adopted, the data and the pilot signal interfere with each other. For example, for data, a pilot signal superimposed on the data is an interference factor for the data; for a pilot, the data superimposed on the pilot signal is an interfering factor for the pilot signal. The above non-orthogonal transmission scheme for pilot signals and data will greatly increase the complexity of superimposed transmission and reception of the pilot signals and the data.

If the above-described pilot signal and data superimposed hybrid transmission scheme is adopted in a multi-stream (also referred to as multi-port) transmission process, the receiver may not be able to effectively parse each stream of pilot signals and data. This is because when one or more layers of data transmission and one or more layers of pilot signal transmission are superimposed on the same time-frequency resources, there are more mutual interference factors. For example, there are interference between pilot layers, interference between data layers, interference between different data layers to different pilot layers, and interference between different pilot layers to different data layers.

In order to solve the above problems, the applicant conducted research and testing on the transmission characteristics of multi-stream pilots and multi-stream data. Applicants have found that when one or more layers of data (which may be referred to as multi-stream data) and one or more layers of pilot signals (which may be referred to as multi-stream pilot signals) are superimposed on the same time-frequency resources, the parsing/demodulation and/or channel estimation effects of each layer of data and each layer of pilot signals are very sensitive to the transmission power. For example, the transmission power of the pilot signal is inversely proportional to the reception complexity; and the transmission power of data is inversely proportional to the complexity of parsing at the receiving end.

Based on this, an embodiment of the present disclosure proposes a wireless communication method. Different from the related art in which multi-stream pilot signals and data are superimposed on the same transmission resources, the embodiment of the present disclosure can superimpose and transmit part of the multi-stream pilot signals and data on the same transmission resources, that is, part or all of transmission resources occupied by pilot signals of different streams in the pilot signals of different streams are different. In this way, a number of streams of pilot signals transmitted on the same transmission resources can be reduced, and transmission power of the pilot signals and/or data on the transmission resources can be increased, thereby helping to reduce interference between the pilot signals and the data, and improving system performance.

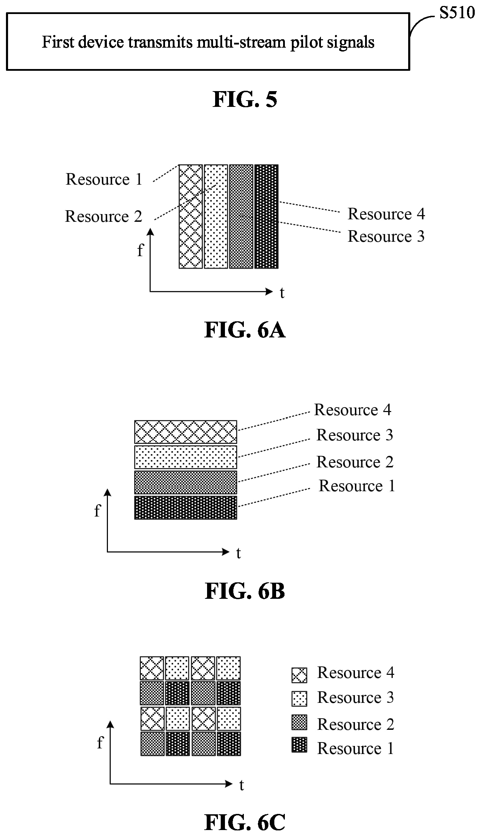

Hereinafter, a wireless communication method provided by an embodiment of the present disclosure will be described with reference to FIG. 5. The method shown in FIG. 5 involves a first device and a second device. Here, the first device and the second device may be any of the aforementioned types of network devices and terminal devices. For example, the first device is a first terminal device, and the second device may be a network device or a second terminal device. For another example, the first device is a first network device, and the second device may be a terminal device or a second network device.

Referring to FIG. 5, in S510, the first device transmits multi-stream pilot signals.

The pilot signal may be referred to as a reference signal. In the embodiment of the present disclosure, the multi-stream pilot signals can also be understood as pilot signals for multiple ports, multi-stream reference signals, or reference signals for multiple ports.

In some embodiments, the multi-stream pilot signals may be transmitted by being superimposed with some or all of the data, i.e., transmission resources occupied by the multi-stream pilot signals are some or all of transmission resources occupied by transmission data. In order to facilitate understanding, hereinafter, data superimposed and transmitted with the multi-stream pilot signals among the transmission data is referred to as multi-stream data, that is, transmission resources occupied by the multi-stream pilot signals are transmission resources occupied by the multi-stream data.

In some embodiments, the multi-stream pilot signal may include a demodulation reference signal (DMRS), a channel state information-reference signal (CSI-RS), a phase-tracking reference signal (PT-RS), a sounding reference signal (SRS), an SSB synchronization signal block (SS/PBCH block), a positioning reference signal (PRS), and the like. The DMRS may be a DMRS reference signal for the above-described multi-stream data, or may be a DMRS reference signal for data other than the above-described multi-stream data.

In some embodiments, transmission resources occupied by pilot signals of different streams of the multi-stream pilot signals are different in part or in whole. For example, each of the multi-stream pilot signals occupies a different transmission resource. As one example, a first stream pilot signal is transmitted on a first transmission resource unit or a first set of transmission resource units, and a second stream pilot signal is transmitted on a second transmission resource unit or a second set of transmission resource units. For another example, the multi-stream pilot signals include multiple groups of pilot signals, and each group of pilot signals occupies different transmission resources. As one example, a first group of pilot signals is transmitted on a first transmission resource unit or a first set of transmission resource units, and a second group of pilot signals is transmitted on a second transmission resource unit or a second set of transmission resource units.

In some embodiments, time-domain transmission resources and/or frequency-domain transmission resources occupied by pilot signals of different steams of the multi-stream pilot signals are different. An exemplary description will be given below with reference to FIG. 6.

FIG. 6A is an example diagram of different time-domain resources; FIG. 6B is an example diagram of different frequency-domain resources; and FIG. 6C is an example diagram of resources that differ in both the time domain and the frequency domain. Taking the multi-stream pilot signals including 4-stream pilot signals as an example, if each stream pilot signal occupies different transmission resources, the 4-stream pilot signals may occupy resources 1 to 4 in FIG. 6A respectively, or occupy resources 1 to 4 in FIG. 6B respectively, or occupy resources 1 to 4 in FIG. 6C respectively. Taking the multi-stream pilot signals including four groups of pilot signals as an example, if each group of pilot signals occupy different transmission resources, the four groups of pilot signals may occupy the resources 1 to 4 in FIG. 6A respectively, or occupy the resources 1 to 4 in FIG. 6B respectively, or occupy the resources 1 to 4 in FIG. 6C respectively.

Taking the multi-stream pilot signals as 4-stream pilot signals as an example, in the related art, when the 4-stream pilot signals are superimposed and transmitted with data, the 4-stream pilot signals occupy the same transmission resources. Different from the related art, in the embodiment of the present disclosure, at least some pilot signals in the 4-stream pilot signals occupy different transmission resources. In this way, a number of streams of the pilot signals transmitted in a resource unit that superimposes the transmission of the pilot signals and the data can be reduced, and the transmission power of the pilot signals and/or the data on the transmission resource can be improved, thereby helping to reduce interference between the pilot signals and the data, and improving system performance.

As previously mentioned, the parsing and/or channel estimation effects of each layer data and each layer pilot signal are very sensitive to the transmission power. Therefore, an embodiment of the present disclosure provides a power allocation mechanism to solve the problem of power allocation of pilot signals and data in the process of superimposed transmission of pilot signals and data.

In some embodiments, multi-stream pilot signals may be transmitted at certain power values for ease of implementation.

In some embodiments, transmission power of the multi-stream pilot signals may be determined based on ratio information. For example, the first device or the second device may transmit a first group of pilot signals based on a first ratio, where the first group of pilot signals occupy the same transmission resources. The first ratio is a ratio of a transmission power of the first group of pilot signals to a total transmission power corresponding to transmission resources occupied by the first group of pilot signals. The total transmission power corresponding to the transmission resources occupied by the first group of pilot signals mentioned herein may refer to a sum of a transmission power of data and the transmission power of the pilot signals on the transmission resources occupied by the first group of pilot signals.

In some embodiments, the first ratio may be one of the following: 1%, 2%, 5%, 10%, 12.5%, 15%, 16.7%, 20%, 25%, 30%, 33%, 35%, 40%, 45%, 50%, or 60%. The value of the first ratio may be less than or equal to a first preset threshold (e.g., 60%) in consideration of the utilization of the data transmission resources. The first preset threshold may be determined, for example, based on the situation of the data load, or may be predefined or preconfigured.

Determining the transmission power of the multi-stream pilot signals based on ratio information is helpful to balance the transmission power of the pilot signals and the transmission power of the multi-stream data, that is, it is helpful to avoid the processing complexity or reception failure at the receiving end caused by insufficient pilot signal transmission power, and at the same time, it is helpful to avoid the data analysis complexity or parsing failure caused by excessive pilot signal transmission power.

In some embodiments, if a-stream pilot signals are included in the first group of pilot signals, a transmission power of each of the a-stream pilot signals may be the same or different. That is, the transmission power of each stream pilot signal in the first group of pilot signals may be evenly distributed or non-evenly distributed.

For example, the transmission power of each of the a-stream pilot signals may be one-a-th of the total transmission power of the first group of pilot signals.

As another example, the transmission power of each stream pilot signal in the first group of pilot signals is determined according to certain sub-ratio information. As an example, in the a-stream pilot signals, at least two streams of pilot signals have different sub-ratios. Taking the first group of pilot signals including at least a first stream pilot signal and a second stream pilot signal as an example, the first stream pilot signal may be transmitted based on a first sub-ratio, the first sub-ratio being a ratio of a transmission power of the first stream pilot signal to a total transmission power of the first group of pilot signals. The second stream pilot signal may be transmitted based on a second sub-ratio, which is a ratio of a transmission power of the second stream pilot signal to the total transmission power of the first group of pilot signals. The first sub-ratio and the second sub-ratio are different.

It should be noted that, in some embodiments, a sub-ratio corresponding to each stream pilot signal may be the same, that is, average distribution of transmission power of the pilot signals may be realized based on the sub-ratio information.

In some embodiments, the sub-ratio information may be pre-configured, pre-defined, or determined according to a usage scenario. For example, the importance of pilot signals varies in different usage scenarios. Therefore, determining the sub-ratio information for the importance of pilot signals in different use scenarios is helpful to improve the system performance.

In some embodiments, the sub-ratio information, such as the first sub-ratio and the second sub-ratio, may be one of 1%, 2%, 5%, 10%, 12.5%, 15%, 16.7%, 20%, 25%, 30%, 33%, 35%, 40%, 45%, 50%, 60%, 70%, or 80%.

In some embodiments, multi-stream data transmitted in superposition with multi-stream pilots may be transmitted according to a certain power value to facilitate implementation; alternatively, transmission power of the multi-stream data may also be determined based on ratio information. For example, the first device or the second device may transmit the multi-stream data based on a second ratio, which is a ratio of a transmission power of the multi-stream data to a total transmission power corresponding to transmission resources occupied by the multi-stream pilot signals. The total transmission power referred to herein may refer to a sum of a power of transmitting data and a power of transmitting the pilot signals on the transmission resources occupied by the multi-stream pilot signals.

In some embodiments, the second ratio may be one of 99%, 98%, 95%, 90%, 87.5%, 85%, 83.3%, 80%, 75%, 70%, 67%, 65%, 60%, 55%, 50%, or 40%. The value of the second ratio may be greater than or equal to a second preset threshold (e.g., 40%) in consideration of the utilization of the data transmission resources. The second preset threshold may be determined based on, for example, a data load situation, a use scenario and other factors, or may be predefined or preconfigured.

Determining the transmission power of multi-stream data based on ratio information helps to balance the transmission power of multi-stream data and the transmission power of multi-stream pilots, that is, it helps to avoid the problem of parsing complexity or parsing failure caused by insufficient multi-stream data transmission power, and at the same time, it helps to avoid the problem of complexity or reception failure caused by excessive data transmission power.

In some embodiments, if the multi-stream data is b-stream data, a transmission power of each of the b-stream data may be the same or different. That is, the transmission power of each stream data in the b-stream data may be evenly distributed or non-evenly distributed.

For example, a transmission power of each of the b-stream data may be one-b-th of the total transmission power of the b-stream data.

For another example, the transmission power of each stream data in the b-stream data is determined according to certain sub-ratio information. As an example, in the b-stream data, at least two streams of data have different sub-ratios. Taking the b-stream data including at least a first stream data and a second stream data as an example, the first stream data may be transmitted based on a third sub-ratio, the third sub-ratio being a ratio of the transmission power of the first stream data to a total transmission power of the multi-stream data. The second stream data is transmitted based on a fourth sub-ratio, which is a ratio of a transmission power of the second stream data to the total transmission power of the multi-stream data. Among them, the third sub-ratio and the fourth sub-ratio are different.

It should be noted that, in some embodiments, the sub-ratio corresponding to each stream of data may be the same, that is, the average distribution of data transmission power may be realized based on the sub-ratio information.

In some embodiments, the sub-ratio information, such as the third sub-ratio and the fourth sub-ratio, may be one of 1%, 2%, 5%, 10%, 12.5%, 15%, 16.7%, 20%, 25%, 30%, 33%, 35%, 40%, 45%, 50%, 60%, 70%, or 80%.

It should be noted that the transmission power allocation scheme for the pilot signals and the data transmission power allocation scheme described above can be realized in any combination. For example, the multi-stream data may be transmitted according to a certain power value, and the transmission power of the multi-stream pilot signals may be determined according to a first ratio. As another example, the multi-stream pilot signals may be transmitted according to certain power values, and the transmission power of the multi-stream data may be determined according to the second ratio. As another example, the transmission power of multi-stream data transmitted over the same transmission resources may be evenly distributed, while the transmission power of multi-stream pilot signals transmitted over the transmission resources may be non-evenly distributed, as determined based on sub-ratio information. As another example, the transmission power of multi-stream data transmitted over the same transmission resources may be non-evenly distributed, as determined based on sub-ratio information, while the transmission power of multi-stream pilot signals transmitted over the transmission resources may be evenly distributed. As another example, the transmission power of the multi-stream data and the transmission power of the multi-stream pilot signals transmitted on the same transmission resources are both evenly distributed or non-evenly distributed, as determined based on sub-ratio information.

In some embodiments, the power allocation mechanism described above may be indicated through configuration information. For example, the first device or the second device may acquire first configuration information, where the first configuration information is used to configure a transmission mode of multi-stream pilot signals and/or a transmission mode of transmission data.

In some embodiments, the first configuration information may be determined based on protocol predefined information.

In some embodiments, the first configuration information may be determined based on indication information from a network device or indication information from a terminal device. For example, if the first device is a terminal device, the first device may receive the first configuration information transmitted by the network device, or the first device may transmit the first configuration information to the network device to notify the network device of a power allocation scheme for pilot signals and/or data. In other words, the second device may transmit the first configuration information to the first device or receive the first configuration information transmitted by the first device. As an example, the first device may directly indicate various parameters in the first configuration information, or may indicate the first configuration information through a power allocation scheme identifier.

In some embodiments, before the first device or the second device acquires the first configuration information, the first device or the second device may request the first configuration information, such as the first device requesting the first configuration information from the second device.

In some embodiments, the first device may transmit capability information to the second device, the capability information being used to indicate a transmission mode of multi-stream pilot signals and/or a transmission mode of transmission data supported by the first device. For example, the capability information may include parameters associated with transmission power for pilot signals or data, such as a maximum value of transmission power on a particular resource, a maximum value of transmission power of multi-stream pilot signals, a maximum value of a supported first ratio, and a minimum value of a supported second ratio, etc. As another example, the capability information may also include one or more power allocation schemes for pilot signals and/or data. As another example, the capability information may include correspondences between multi-stream pilot signals and transmission resources, such as which of the multi-stream pilot signals are transmitted on the same resource, and/or information on transmission resources occupied by the pilot signals transmitted on the same resource, such as symbols, subcarrier information, and the like. As an example, the first device may be a terminal device, and the second device may be a network device. That is, the terminal device may transmit capability information to the network device, where the capability information may be used to indicate a transmission mode of multi-stream pilot signals that the terminal device can operate and process, and/or a transmission mode of transmission data.

Further, the second device may determine the first configuration information based on the capability information transmitted by the first device. For example, the second device may transmit the first configuration information to the first device, where the first configuration information is determined based on the capability information. For another example, if the capability information reported by the first device includes one or more power allocation schemes, the second device may send a response message of the capability information to the first device to indicate a power allocation scheme used by the first device. If a power allocation scheme is included in the capability information, the response message may include whether to apply the power allocation scheme. If multiple power allocation schemes are included in the capability information, the response message may indicate whether to apply the power allocation schemes included in the capability information. Further, if the power allocation schemes in the capability information are applied, the second device may indicate a target power allocation scheme to the first device, such as indicating the target power allocation scheme through a scheme identifier.

The above-described various schemes for determining the first configuration information may be implemented in combination. For example, when multiple power allocation schemes are predefined in the protocol, the terminal device may determine a power allocation scheme to be used according to a use scenario, or may receive a power allocation scheme indicated by the network device. The network device may configure a target power allocation scheme for the terminal device based on multiple power allocation schemes predefined by the protocol, such as indicating the target allocation scheme through a scheme identifier, so as to save resources. As another example, the network device may pre-configure multiple power allocation schemes for the terminal device, and further indicate a target power allocation scheme to the terminal device based on pre-configuration information. In another example, some parameters in the first configuration information are determined based on protocol predefined information, while others are determined based on indication information from the network device.

In some embodiments, the transmission mode of the multi-stream pilot signals includes an association between multi-stream pilot signals and transmission resources, and/or transmission power of the multi-stream pilot signals. For example, the association between the multi-stream pilot signals and the transmission resources includes which of the multi-stream pilot signals are transmitted on same resources, and/or information on the transmission resources occupied by pilot signals transmitted on the same resources, such as symbols, subcarrier information, and the like. As an example, the association between the multi-stream pilot signals and the transmission resources may indicate that each stream pilot signal of the multi-stream pilot signals occupies a different transmission resource, and/or information on a transmission resource occupied by each stream pilot signal, such as a symbol, subcarrier, or the like corresponding to the transmission resource. As another example, the association between the multi-stream pilot signals and the transmission resources may indicate a grouping situation of the multi-stream pilot signals, such as a number of groups included in the multi-stream pilot signals, and a number of streams of pilot signals included in each group of pilot signals and stream identifiers of the pilot signals. Each group of pilot signals occupies the same transmission resources. Further, the association between the multi-stream pilot signals and the transmission resources may also indicate information on transmission resources occupied by each group of pilot signals.

In some embodiments, the first configuration information may be used to configure a transmission mode of multi-stream pilot signals, or to configure a transmission mode of multi-stream data. In some embodiments, the first configuration information may also be used to configure a power allocation scheme for pilot signals and data in resources for multi-stream pilot signals and multi-stream data superimposed transmission. For example, the multi-stream pilot signals includes a first group of pilot signals, the transmission data includes the multi-stream data, and if a first resource unit is used to transmit the first group of pilot signals and the multi-stream data, the first configuration information is used to configure transmission power of the first group of pilot signals and transmission power of the multi-stream data in the first resource unit.

In some embodiments, the first configuration information may include or indicate one or more of the following: a number of pilot signal groups included in the multi-stream pilot signals; a number of pilot streams included in each pilot signal group; a total transmission power of each pilot signal group; a transmission power of each stream pilot signal in the pilot signal group; a number of data streams included in the multi-stream data; a total transmission power of the multi-stream data and a first group of pilot signals; a total transmission power of the multi-stream data; a transmission power of each stream data in the multi-stream data; a first identifier indicating a power allocation scheme employed to transmit the data and/or the multi-stream pilot signals; or a second identifier indicating a transmission resource allocation scheme for the multi-stream pilot signals; where each pilot signal group occupies the same transmission resources, and transmission resources occupied by the first group of pilot signals are transmission resources occupied by the multi-stream data.

In the embodiment of the present disclosure, for a non-orthogonal superposition transmission scheme of pilot signals and data, at least some of the multi-stream pilot signals occupy different transmission resources. Therefore, by indicating the number of groups of pilot signals included in the multi-stream pilot signals and the number of pilot streams included in each pilot signal group through the first configuration information, it is possible to determine pilot signals occupying the same transmission resources and pilot signals occupying different transmission resources. The first configuration information may also include, for example, the number of pilot streams of the multi-stream pilot signals.

In some embodiments, the first configuration information may further include information on transmission resources occupied by multi-stream pilot signals, so as to determine an association between the multi-stream pilot signals and the transmission resources. For example, the first configuration information may include one or more of the following: a type of transmission resource occupied by each stream pilot signal and/or each group of pilot signals (e.g., a different time-domain resource, a different frequency-domain resource, or a different time-frequency resource), a starting position of the transmission resource, an offset of the transmission resource (e.g., relative to the starting position), or whether transmission resources occupied by two groups of pilot signals are continuous.

In some embodiments, the first configuration information may include a second identifier for indicating a transmission resource allocation scheme for the multi-stream pilot signals. For example, the transmission resource allocation scheme for the multi-stream pilot signals may include the aforementioned grouping of the multi-stream pilot signals, such as the number of groups and the number of streams of the pilot signals within each group. The transmission resource allocation scheme for the multi-stream pilot signals may further include the aforementioned association between the multi-stream pilot signals and the transmission resources. The second identifier indicates the transmission resource allocation scheme for the multi-stream pilot signals, which helps to save a transmission and parsing time for multiple configuration parameters, thereby helping to improve system efficiency.

The parameters associated with the power allocation scheme for the multi-stream pilots and/or the multi-stream data in the first configuration information are described in detail below.

In some embodiments, the first configuration information may be used to indicate a total transmission power of each pilot signal group. Taking a first group of pilot signal groups as an example, the first configuration information may indicate a total transmission power occupied by a-stream pilot signals in the first pilot signal group. The total transmission power of the first pilot signal group may be indicated by an absolute value or a relative value. The relative value mentioned herein may be a difference between the total transmission power of the first pilot signal group and a reference value. Indicating the total transmission power of the first pilot signal group through the relative value contributes to saving transmission resources. The reference value may be a transmission power value of a certain stream or a certain group of pilot signals, a transmission power value of one stream or multiple streams of data, or a specific reference power. Alternatively, the first configuration information may indicate the total transmission power of each pilot signal group through ratio information, for example, the first configuration information may include the aforementioned first ratio.

In some embodiments, the first configuration information may indicate a transmission power for each stream pilot signal in a pilot signal group. For example, the first configuration information may indicate that the transmission power of each stream pilot signal in the pilot signal group is evenly distributed or non-evenly distributed. Thus, the transmission power of each stream pilot signal can be determined based on a total transmission power of the pilot signal group and average distribution indication information. For another example, the first configuration information may indicate the transmission power of each stream pilot signal through sub-ratio information, for example, the first configuration information may include the first sub-ratio information, the second sub-ratio information, and the like mentioned above, or sub-ratio information of the transmission power of each stream pilot signal to the total transmission power corresponding to transmission resources occupied by it. Thus, the transmission power of each pilot signal stream can be determined based on the total transmission power of the pilot signal group or the total transmission power of the transmission resources, and the sub-ratio information. As another example, the first configuration information may indicate the transmission power of each pilot signal stream in the pilot signal group through an absolute value or a relative value. The relative value mentioned herein may be a difference between the transmission power of each pilot signal stream and a reference value. The reference value may be a transmission power value of a certain stream or a certain group of pilot signals, a transmission power value of one stream or multiple streams of data, or a specific reference power.

As mentioned above, the method provided by the embodiment of the present disclosure can be used for non-orthogonal superimposed transmission of multi-stream data and multi-stream pilots. Based on this, the first configuration information may include a power allocation scheme of the multi-stream data.

In some embodiments, the first configuration information may be used to indicate a number of data streams of the multi-stream data.

In some embodiments, the first configuration information may be used to indicate a total transmission power of the multi-stream data and the first group of pilot signals and/or the total transmission power of the multi-stream data. For example, the first configuration information may indicate the total transmission power of the multi-stream data through ratio information, such as the second ratio mentioned above. As another example, the first configuration information may indicate the total transmission power of the multi-stream data through an absolute value or a relative value. The relative value mentioned herein may be a difference between the total transmission power of the multi-stream data and a reference value, and the reference value is determined here in the same manner as the reference value mentioned above, and will not be described again here for simplicity.

In some embodiments, the first configuration information may indicate a transmission power for each of the multi-stream data. For example, the first configuration information may indicate that the transmission power of each of the multi-stream data is evenly distributed or non-evenly distributed. In this way, the transmission power of each data stream can be determined based on the total transmission power of the multi-stream data and average distribution indication information.

For another example, the first configuration information may indicate the transmission power of each data stream through sub-ratio information, for example, the first configuration information may include the aforementioned third sub-ratio, fourth sub-ratio information, or the like, or sub-ratio information of the transmission power of each data stream to the total transmission power corresponding to transmission resources occupied by the multi-stream data. Thus, the transmission power of each data stream can be determined based on the total transmission power of the multi-stream data or the total transmission power of the transmission resources, and the sub-ratio information. As another example, the first configuration information may indicate the transmission power of each of the multi-stream data through an absolute value or a relative value. The relative value mentioned herein may be a difference between the transmission power of each stream of data and a reference value. The method of determining the reference value can be referred to the foregoing.

The relative value or the absolute value of the above-described power information may be indicated in the form of db, dbm, or the like.

It should be noted that the multiple ratio information and sub-ratio information mentioned above may be indicated based on absolute values and relative values. For example, the second ratio may be indicated through a relative value to the first ratio or a particular reference ratio.

In some embodiments, the first configuration information may include the first identifier and/or second identifier mentioned above. If the power allocation scheme and/or the pilot transmission scheme are predefined or preconfigured, the first configuration information indicates the power allocation scheme and/or the pilot transmission scheme through the scheme identifier to facilitate implementation. Here, the power allocation scheme and/or the pilot transmission scheme, and configuration parameters involved in the scheme may be predefined by the protocol or may be indicated by the network device.

The method provided by the embodiment of the present disclosure may be used for one or more of the following processes: an uplink transmission process, a downlink transmission process, or an uplink and downlink duplex transmission process. That is, the multi-stream pilot signals may be uplink reference signals and/or downlink reference signals. The multi-stream data may be uplink data and/or downlink data.

Based on this, some or all of the parameters in the first configuration information may be applied to an uplink transmission process, a downlink transmission process, or an uplink and downlink duplex transmission process. Here, first configuration information may be the same or different for different types of transmission processes. For example, the power allocation scheme may include one or more of the following: an uplink power allocation scheme, a downlink power allocation scheme, or an uplink and downlink power allocation scheme. The pilot transmission scheme includes one or more of the following: an uplink pilot transmission scheme, a downlink pilot transmission scheme, or an uplink and downlink pilot transmission scheme. Here, pilot transmission schemes and/or power allocation schemes may be the same or different for different types of transmission processes.

In some embodiments, the first configuration information may include a third identifier, where the third identifier is used to indicate that the configuration information is used for one or more of the following: an uplink transmission process, a downlink transmission process, or an uplink and downlink duplex transmission process.

In some embodiments, the first device may request the first configuration information from the second device, and the request message may include the third identifier described above.

In some embodiments, the first configuration information may be carried in one or more of the following: a broadcast message; a downlink message in a random access procedure; a physical downlink control channel (PDCCH); a physical downlink shared channel (PDSCH); or an artificial intelligence (AI)-dedicated downlink channel. The broadcast message mentioned herein may include, for example, a master information block (MIB), a system information block (SIB) 1 or other SIB messages. The downlink message in the random access procedure may include, for example, an MsgB in a two-step random access procedure, and/or an Msg2 and/or Msg4 in a four-step random access procedure. As one example, the first configuration information may also be carried in capability indication information of the network device.

In some embodiments, the aforementioned capability information and/or request message may be carried in one or more of the following: a radio resource control (RRC) message; an uplink control information (UCI) message; an uplink message in a random access procedure; a physical uplink control channel (PUCCH); a physical uplink shared channel (PUSCH); or an AI-dedicated uplink channel. As an example, the capability information may also be carried in capability indication information of the terminal device.

Based on the transmission and power allocation scheme for the multi-stream pilot signals and the multi-stream data provided by the embodiment of the present disclosure, the multi-stream pilots and the multi-stream data can be transmitted at different power ratios on specific transmission resources, so as to increase the pilot transmission power of each stream as much as possible, and to ensure that the data transmission power of each stream will not be excessively lost due to the superimposed transmission of the pilots as much as possible, thus ensuring the performance and system gain of the multi-stream pilot signals superimposed scheme. In addition, an embodiment of the present disclosure also provides an alignment understanding scheme for the transmission scheme and/or the power allocation scheme between the first device and the second device, thereby ensuring that both the transmitting and receiving ends can normally transmit and effectively receive the above-described multi-stream superimposed pilot signals.

Hereinafter, the methods provided by the embodiments of the present disclosure will be described by way of example below with reference to an embodiment 1 and an embodiment 2.

### Embodiment 1

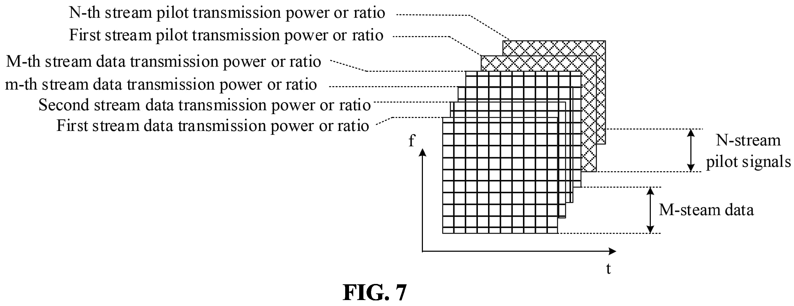

FIG. 7 is an example diagram of a superimposed transmission scheme for M-stream data and N-stream pilot signals. Where M and N are both non-negative integers. In FIG. 7, a transmission power or a ratio of the transmission power of a different data stream and a different pilot signal stream is represented by a different transmission resource layer.

Each transmission resource shown in FIG. 7, such as a resource element (RE), may adopt a first power allocation scheme when transmitting the above-described M-stream data and N-stream pilot signals.

Features of the first power allocation scheme may include one or more of the following information: a total transmission power P_total of M-stream data and N-stream (port) pilot signals; a ratio of a transmission power (P_d) of the M-stream data to the total transmission power (such as the second ratio mentioned above); or a ratio of a transmission power (P_p) of the N-stream (port) pilot signals to the total transmission power (such as the first ratio mentioned above).

In some embodiments, for M-stream data, when a total power of the M-stream data is P_d, the power P_d is evenly distributed among the M-stream data. For example, a transmission power of each data stream is P_d/M. In other words, a transmission power ratio of each data stream is one-M-th (i.e., $\frac{1}{M}$) of the second ratio of the total transmission power over the transmission resources.

In some embodiments, for M-stream data, when a total power of the M-stream data is P_d, the power P_d is unevenly distributed among the M-stream data. For example, a transmission power of the m-th data stream is P_d _m, which accounts for the m-th sub-ratio of the total power of the M-stream data, and m is a positive integer from 1 to M, inclusive. In other words, a transmission power ratio of the m-th data stream is the m-th data power sub-ratio in the second ratio of the total transmission power on the transmission resources.

In some embodiments, for N-stream (port) pilot signals, when a total power of the N-stream (port) pilot signals is P_p, the power P_p is evenly distributed among the N-stream (port) pilot signals. For example, a transmission power of each data stream is P_p/N. In other words, a transmission power ratio of each pilot signal stream (port) is one-N-th of the first ratio of the total transmission power over the transmission resources.

In some embodiments, for N-stream (port) pilot signals, when a total power of the N-stream pilot signals is P_p, the power P_p is unevenly distributed among the N-stream pilot signals. For example, a transmission power of the n-th pilot signal stream (port) is P_p_n, which accounts for the n-th sub-ratio of the total power of the N-stream (port) pilot signals, and n is a positive integer from 1 to N, inclusive. In other words, a transmission power ratio of the n-th pilot signal stream (port) is the n-th pilot power sub-ratio in the first ratio of the total transmission power over the transmission resources.

Then, in some embodiments, features of the first power distribution scheme may further include: one or more of the ratio information described above, and/or indication information on whether the power is evenly distributed.

Six examples of the first power allocation scheme (i.e., Examples 1 to 6) are given below, where Examples 1 and 2 are power allocation schemes for superimposed transmission of M-stream data and a single-stream (port) pilot signal, and Examples 2 to 6 are power allocation schemes for superimposed transmission of M-stream data and N-stream (port) pilot signals. Here, M may be, for example, 1, 2, 3, 4, 5, 6, 7, 8, or the like, and N may be, for example, 1, 2, 3, 4, 5, 6, 7, 8, or the like. For another example, M is greater than or equal to N.

### Example 1

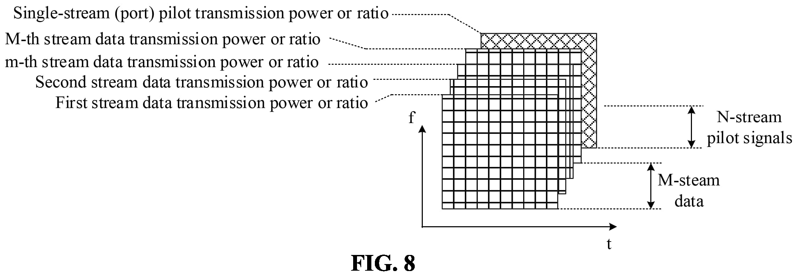

FIG. 8 is an example diagram of a power allocation scheme for superimposed transmission of M-stream data and a single-stream pilot signal.

Example 1 presents a power allocation scheme for the superimposed transmission of M-stream data with a single-stream (port) pilot signal, wherein a total transmission power of the M-stream data is allocated evenly for each stream.

Features of the above-described power allocation scheme may include: a ratio of an M-stream data transmission power (P_d) to the total transmission power, i.e., a second ratio, and a ratio of the single-stream (port) pilot signal transmission power (P_p) to the total transmission power, i.e., a first ratio.

Features of the above-described power allocation scheme may further include indication information for average power allocation among data streams. For the M-stream data, when a total power of the M-stream data is P_d, the power P_d is evenly distributed among the M-stream data. For example, a transmission power of each data stream is P_d/M, and a transmission power ratio of each stream of data is one-M-th of the second ratio of the total transmission power on the transmission resources.

In some embodiments, the second ratio may be: 99%, 98%, 95%, 90%, 87.5%, 85%, 83.3%, 80%, 75%, 70%, 67%, 65%, 60%, 55%, 50%, 40%, etc.

In some embodiments, the first ratio may be: 1%, 2%, 5%, 10%, 12.5%, 15%, 16.7%, 20%, 25%, 30%, 33%, 35%, 40%, 45%, 50%, 60%, etc.

Taking M as 4 as an example, features of the above-described power allocation scheme may include one or more of the following: a ratio of the 4-stream data transmission power (P_d) to the total transmission power is a second ratio, such as 80%; or, a ratio of the single-stream (port) pilot signal transmission power (P_p) to the total transmission power is a first ratio, for example, 20%.

For the 4-stream data, when a total power of the 4-stream data is P_d, the power P_d is evenly distributed among the 4 data streams. For example, a transmission power of each data stream is P_d/4, and a transmission power ratio of each data stream is one-quarter of the second ratio of the total transmission power on the transmission resources, for example one-quarter of 80%, i.e., 20%.

For a single stream (port) pilot signal, a total power of the single stream (port) pilot signal is P_p, and a transmission power ratio of the single stream (port) pilot signal is 20% of the total transmission power on the transmission resources.

Taking M as 2 as an example, features of the above-described power allocation scheme may include one or more of the following: a ratio of the 2-stream data transmission power (P_d) to the total transmission power is a second ratio, such as 80%; or, a ratio of the single-stream (port) pilot transmission power (P_p) to the total transmission power is the first ratio, i.e., 20%.

For the 2-stream data, when a total power of the 2-stream data is P_d, the power P_d is evenly distributed among the 2-stream data. For example, a transmission power of each data stream is P_d/2, and a transmission power ratio of each data stream is one-half of the second ratio of the total transmission power on the transmission resources, for example one-half of 80%, i.e., 40%.

For a single stream (port) pilot signal, a total power of the single stream (port) pilot signal is P_p, and a transmission power ratio of the single stream (port) pilot signal is 20% of the total transmission power on the transmission resources.

### Example 2

Still referring to FIG. 8, Example 2 shows a power allocation scheme for superimposed transmission of M-stream data with a single-stream (port) pilot signal, where a total transmission power of the M-stream data is non-evenly allocated for each stream.

Features of the above-described power allocation scheme may include: a ratio of the M-stream data transmission power (P_d) to the total transmission power, i.e., a second ratio, and a ratio of the single-stream (port) pilot signal transmission power (P_p) to the total transmission power, i.e., a first ratio.

Features of the power allocation scheme described above may further include indication information for non-average power allocation among data streams. For the M-stream data, when a total power of the M-stream data is P_d, the power P_d is unevenly distributed among the M-stream data. For example, a transmission power of the m-th data stream is P_d_m, which accounts for the m-th data transmission sub-ratio of the total power of the M-stream data, and m is a positive integer from 1 to M, inclusive. In other words, a transmission power ratio of the m-th data stream is the m-th data transmission sub-ratio in the second ratio of the total transmission power on the transmission resources.

In some embodiments, the second ratio may be: 99%, 98%, 95%, 90%, 87.5%, 85%, 83.3%, 80%, 75%, 70%, 67%, 65%, 60%, 55%, 50%, 40%, or the like.

In some embodiments, the first ratio may be: 1%, 2%, 5%, 10%, 12.5%, 15%, 16.7%, 20%, 25%, 30%, 33%, 35%, 40%, 45%, 50%, 60%, or the like.

In some embodiments, the m-th data transmission sub-ratio is: 1%, 2%, 5%, 10%, 12.5%, 15%, 16.7%, 20%, 25%, 30%, 33%, 35%, 40%, 45%, 50%, 60%, 70%, 80%, etc.

Taking M as 4 as an example, characteristics of the above-described power allocation scheme may include one or more of the following: a ratio of the 4-stream data transmission power (P_d) to the total transmission power is a second ratio, such as 80%; or, a ratio of the single-stream (port) pilot signal transmission power (P_p) to the total transmission power is the first ratio, for example, 20%.

For the 4-stream data, when the total power of the 4-stream data is P_d, the power P_d is unevenly distributed among the 4-stream data. For example, a transmission power of the m-th data stream is P_d_m, which accounts for the m-th data transmission sub-ratio of the total power of the M-stream data, and m is a positive integer from 1 to 4, inclusive. That is, a transmission power ratio of the m-th data stream is the m-th data transmission sub-ratio in the second ratio of the total transmission power on the transmission resources. For example, the first sub-ratio is 40%, the second sub-ratio is 40%, the third sub-ratio is 10%, and the fourth sub-ratio is 10%. For another example, the first sub-ratio is 40%, the second sub-ratio is 30%, the third sub-ratio is 20%, and the fourth sub-ratio is 10%.

For a single stream (port) pilot signal, a total power of the single stream (port) pilot signal is P_p, and a transmission power ratio of the single stream (port) pilot signal is 20% of the total transmission power on the transmission resources.

Taking M as 2 as an example, the characteristics of the above-described power allocation scheme may include one or more of the following: a ratio of the 2-stream data transmission power (P_d) to the total transmission power is a second ratio, such as 80%; or, a ratio of the single-stream (port) pilot transmission power (P_p) to the total transmission power is the first ratio, e.g., 20%.

For the 2-stream data, when a total power of the 2-stream data is P_d, the power P_d is unevenly distributed among the two data streams. For example, a transmission power of the m-th data stream is P_d_m, which accounts for the m-th data transmission sub-ratio of the total power of the M-stream data, and m is a positive integer taking values in the set {1, 2}. That is, a transmission power ratio of the m-th data stream is the m-th data transmission sub-ratio in the second ratio of the total transmission power on the transmission resources. For example, the first sub-ratio is 60% and the second sub-ratio is 40%. For another example, the first sub-ratio is 75% and the second sub-ratio is 25%.

For a single stream (port) pilot signal, a total power of the single stream (port) pilot signal is P_p, and a transmission power ratio of the single stream (port) pilot signal is 20% of the total transmission power on the transmission resources.

### Example 3

Example 3 shows a power allocation scheme for a superimposed transmission of M-stream data and N-stream (port) pilot signals, where a total transmission power of the M-stream data is evenly allocated to each data stream, and a total transmission power of the N-stream (port) pilot signals is evenly allocated to each pilot signal stream.

Features of the above-described power allocation scheme may include: a ratio of the M-stream data transmission power (P_d) to the total transmission power, i.e., a second ratio, and a ratio of the N-stream (port) pilot signal transmission power (P_p) to the total transmission power, i.e., a first ratio.

Features of the above-described power allocation scheme may further include indication information indicating that average power allocation among data streams. For the M-stream data, when the total power of the M-stream data is P_d, the power P_d is evenly distributed among the M-stream data. For example, a transmission power of each stream of data is P_d/M, and a transmission power ratio of each stream of data is one-M-th of the second ratio of the total transmission power on the transmission resources.

Features of the above-described power allocation scheme may further include indication information indicating that a power is evenly distributed among pilot signal streams. For the N-stream (port) pilot signals, when the total power of the N-stream (port) pilot signals is P_p, the power P_p is evenly distributed among the N-stream (port) pilot signals. For example, a transmission power of each pilot signal stream is P_p/N. That is, a transmission power ratio of each pilot signal stream (port) is one-N-th of the first ratio of the total transmission power over the transmission resources.

In some embodiments, the first ratio may be: 1%, 2%, 5%, 10%, 12.5%, 15%, 16.7%, 20%, 25%, 30%, 33%, 35%, 40%, 45%, 50%, 60%, or the like.

In some embodiments, the second ratio may be: 99%, 98%, 95%, 90%, 87.5%, 85%, 83.3%, 80%, 75%, 70%, 67%, 65%, 60%, 55%, 50%, 40%, or the like.

Taking M as 4 and N as 2 as an example, the characteristics of the above-described power allocation scheme may include one or more of the following: a ratio of the 4-stream data transmission power (P_d) to the total transmission power is a second ratio, such as 60%; or, a ratio of the 2-stream (port) pilot signal transmission power (P_p) to the total transmission power is a first ratio, for example, 40%.

For the 4-stream data, when a total power of the 4-stream data is P_d, the power P_d is evenly distributed among the 4 data streams. For example, a transmission power per stream of data is P_d/4, and a transmission power ratio per stream of data is one-quarter of the second ratio of the total transmission power on the transmission resources, for example one-quarter of 60%, i.e., 15%.

For a 2-stream (port) pilot signals, when a total power of the 2-stream (port) pilot signals is P_p, the power P_p is evenly distributed among the 2-stream (port) pilot signals. For example, a transmission power of each pilot signal stream is P_p/2. That is, a transmission power ratio of each pilot signal stream (port) is one-half of the first ratio of the total transmission power on the transmission resources, for example one-half of 40%, i.e., the transmission power ratio of each pilot signal stream (port) is 20% of the total transmission power on the transmission resources.

Taking M as 4 and N as 4 as an example, the characteristics of the above-described power allocation scheme may include one or more of the following: a ratio of the 4-stream data transmission power (P_d) to the total transmission power is a second ratio, such as 60%; or, a ratio of the 4-stream (port) pilot signal transmission power (P_p) to the total transmission power is a first ratio, for example, 40%.

For the 4-stream data, when the total power of the 4-stream data is P_d, the power P_d is evenly distributed among the 4 data streams. For example, a transmission power of each stream of data is P_d/4, and a transmission power ratio of each stream of data is one-quarter of the second ratio of the total transmission power on the transmission resources, that is, one-quarter of 60%, that is, 15%.

For 4-stream (port) pilot signals, when the total power of the 4-stream (port) pilot signals is P_p, the power P_p is evenly distributed among the 4 pilot signal streams (ports). For example, a transmission power of each pilot signal stream is P_p/4. That is, a transmission power ratio of each pilot signal stream (port) is one-fourth of the first ratio of the total transmission power on the transmission resources, for example one-fourth of 40%, i.e., the transmission power ratio of each pilot signal stream (port) is 10% of the total transmission power on the transmission resources.

### Example 4

Example 4 shows a power allocation scheme for a superimposed transmission of M-stream data and N-stream (port) pilot signals, where a total transmission power of the M-stream data is non-evenly allocated to each data stream, and a total transmission power of the N-stream (port) pilot signals is evenly allocated to each pilot signal stream.

Characteristics of the above-described power allocation scheme may include: a ratio of the M-stream data transmission power (P_d) to the total transmission power, i.e., a second ratio, and a ratio of the N-stream (port) pilot signal transmission power (P_p) to the total transmission power, i.e., a first ratio.

The characteristics of the power allocation scheme described above may further include indication information indicating that non-average power allocation among data streams. For the M-stream data, when the total power of the M-stream data is P_d, the power P_d is unevenly distributed among the M-stream data. For example, a transmission power of the m-th data stream is P_d_m, which accounts for the m-th data transmission sub-ratio of the total power of the M-stream data, and m is a positive integer from 1 to M, inclusive. In other words, a transmission power ratio of the m-th data stream is the m-th data transmission sub-ratio in the second ratio of the total transmission power on the transmission resources.

Features of the above-described power allocation scheme may further include indication information indicating that average power allocation among pilot signal streams. For the N-stream (port) pilot signals, when the total power of the N-stream (port) pilot signals is P_p, the power P_p is evenly distributed among the N-stream (port) pilot signals. For example, the transmission power of each pilot signal stream is P_p/N. That is, the transmission power ratio of each pilot signal stream (port) is one-N-th of the first ratio of the total transmission power over the transmission resources.

In some embodiments, the first ratio may be: 1%, 2%, 5%, 10%, 12.5%, 15%, 16.7%, 20%, 25%, 30%, 33%, 35%, 40%, 45%, 50%, 60%, or the like.

In some embodiments, the second ratio may be: 99%, 98%, 95%, 90%, 87.5%, 85%, 83.3%, 80%, 75%, 70%, 67%, 65%, 60%, 55%, 50%, 40%, or the like.

In some embodiments, the m-th data transmission sub-ratio is: 1%, 2%, 5%, 10%, 12.5%, 15%, 16.7%, 20%, 25%, 30%, 33%, 35%, 40%, 45%, 50%, 60%, 70%, 80%, or the like.

Taking M as 4 and N as 2 as an example, the characteristics of the above-described power allocation scheme may include one or more of the following: a ratio of the 4-stream data transmission power (P_d) to the total transmission power is a second ratio, such as 60%; or, a ratio of the 2-stream (port) pilot signal transmission power (P_p) to the total transmission power is a first ratio, for example, 40%.

For the 4-stream data, when a total power of the 4-stream data is P_d, the power P_d is unevenly distributed among the four data streams. For example, a transmission power of the m-th data stream is P_d_m, which accounts for the m-th data transmission sub-ratio of the total power of the M-stream data, and m is a positive integer from 1 to 4, inclusive. That is, a transmission power ratio of the m-th data stream is the m-th data transmission sub-ratio in the second ratio of the total transmission power on the transmission resources. For example, the first sub-ratio is 40%, the second sub-ratio is 40%, the third sub-ratio is 10%, and the fourth sub-ratio is 10%. For another example, the first sub-ratio is 40%, the second sub-ratio is 30%, the third sub-ratio is 20%, and the fourth sub-ratio is 10%.

For 2-stream (port) pilot signals, when a total power of the 2-stream (port) pilot signals is P_p, the power P_p is evenly distributed among the 2-stream (port) pilot signals. For example, a transmission power of each pilot signal stream is P_p/2. That is, a transmission power ratio of each stream (port) of pilot signal is one-half of the first ratio of the total transmission power on the transmission resources, for example one-half of 40%, i.e., the transmission power ratio of each pilot signal stream (port) is 20% of the total transmission power on the transmission resources.

Taking M as 4 and N as 4 as an example, the characteristics of the above-described power allocation scheme may include one or more of the following: a ratio of the 4-stream data transmission power (P_d) to the total transmission power is a second ratio, such as 60%; or, a ratio of the 4-stream (port) pilot signal transmission power (P_p) to the total transmission power is a first ratio, for example, 40%.

For the 4-stream data, when a total power of the 4-stream data is P_d, the power P_d is unevenly distributed among the 4-stream data. For example, the transmission power of the m-th stream data is P_d_m, which accounts for the m-th data transmission sub-ratio of the total power of the M-stream data, and m is a positive integer from 1 to 4, inclusive. That is, the transmission power ratio of the m-th stream data is the m-th data transmission sub-ratio in the second ratio of the total transmission power on the transmission resources. For example, the first sub-ratio is 40%, the second sub-ratio is 40%, the third sub-ratio is 10%, and the fourth sub-ratio is 10%. For another example, the first sub-ratio is 40%, the second sub-ratio is 30%, the third sub-ratio is 20%, and the fourth sub-ratio is 10%.

For 4-stream (port) pilot signals, when the total power of the 4-stream (port) pilot signals is P_p, the power P_p is evenly distributed among the 4-stream (port) pilot signals. For example, a transmission power of each pilot signal stream is P_p/4. That is, the transmission power ratio of each pilot signal stream (port) is one-fourth of the first ratio of the total transmission power on the transmission resources, for example one-fourth of 40%, i.e., the transmission power ratio of each pilot signal stream (port) is 10% of the total transmission power on the transmission resources.

### Example 5

Example 5 shows a power allocation scheme for a superimposed transmission of M-stream data and N-stream (port) pilot signals, where a total transmission power of the M-stream data is evenly allocated to each stream of data and a total transmission power of the N-stream (port) pilot signals is non-evenly allocated to each pilot signal stream.

Characteristics of the above-described power allocation scheme may include a ratio of the M-stream data transmission power (P_d) to a total transmission power, i.e., a second ratio, and a ratio of the N-stream (port) pilot signal transmission power (P_p) to the total transmission power, i.e., a first ratio.

Features of the above-described power allocation scheme may further include indication information indicating average power allocation for the data streams. For the M-stream data, when the total power of the M-stream data is P_d, the power P_d is evenly distributed among the M-stream data. For example, a transmission power of each stream of data is P_d/M, and a transmission power ratio of each stream of data is one-M-th of the second ratio of the total transmission power on the transmission resources.

Features of the above-described power allocation scheme may also include indication information indicating non-average power allocation for the pilot signal streams.. For the N-stream (port) pilot signals, when the total power of the N-stream (port) pilot signals is P_p, the power P_p is unevenly distributed among the N-stream (port) pilot signals. For example, a transmission power of the n-th stream (port) pilot signal is P_p_n, which accounts for the n-th pilot transmission sub-ratio of the total power of the N-stream (port) pilot signals, where n is a positive integer from 1 to N, inclusive. That is, the transmission power ratio of the n-th stream (port) pilot signal is the n-th pilot transmission sub-ratio in the first ratio of the total transmission power on the transmission resources.

In some embodiments, the first ratio may be: 1%, 2%, 5%, 10%, 12.5%, 15%, 16.7%, 20%, 25%, 30%, 33%, 35%, 40%, 45%, 50%, 60%, or the like.

In some embodiments, the second ratio may be: 99%, 98%, 95%, 90%, 87.5%, 85%, 83.3%, 80%, 75%, 70%, 67%, 65%, 60%, 55%, 50%, 40%, or the like.

In some embodiments, the n-th pilot transmission sub-ratio is: 1%, 2%, 5%, 10%, 12.5%, 15%, 16.7%, 20%, 25%, 30%, 33%, 35%, 40%, 45%, 50%, 60%, 70%, 80%, or the like.

Taking M as 4 and N as 2 as an example, the characteristics of the above-described power allocation scheme may include one or more of the following: a ratio of the 4-stream data transmission power (P_d) to the total transmission power is a second ratio, such as 60%; or, a ratio of the 2-stream (port) pilot signal transmission power (P_p) to the total transmission power is the first ratio, for example, 40%.

For the 4-stream data, when the total power of the 4-stream data is P_d, the power P_d is evenly distributed among the 4-stream data. For example, a transmission power of each stream of data is P_d/4, and a transmission power ratio of each stream of data is one-quarter of the second ratio of the total transmission power on the transmission resources, for example, one-quarter of 60%, i.e., 15%.

For 2-stream (port) pilot signals, when the total power of the 2-stream (port) pilot signals is P_p, the power P_p is unevenly distributed among the 2-stream (port) pilot signals. For example, a transmission power of the n-th stream (port) pilot is P_p_n, which accounts for the n-th pilot transmission sub-ratio of the total power of the N-stream (port) pilot signals, where n is 1 or 2. That is, a transmission power ratio of the n-th stream (port) pilot signal is the n-th pilot transmission sub-ratio in the first ratio of the total transmission power on the transmission resources. For example, the first sub-ratio is 60% and the second sub-ratio is 40%. Or, for example, the first sub-ratio is 80% and the second sub-ratio is 20%.

Taking M as 4 and N as 4 as an example, the characteristics of the above-described power allocation scheme may include one or more of the following: a ratio of the 4-stream data transmission power (P_d) to the total transmission power is a second ratio, such as 60%; or, a ratio of the 4-stream (port) pilot signal transmission power (P_p) to the total transmission power is a first ratio, for example, 40%.

For 4-stream data, when the total power of the 4-stream data is P_d, the power P_d is evenly distributed among the 4-stream data. For example, a transmission power of each stream of data is P_d/4, and a transmission power ratio of each stream of data is one-quarter of the second ratio of the total transmission power on the transmission resources, that is, one-quarter of 60%, that is, 15%.

For 4-stream (port) pilot signals, when the total power of the 4-stream (port) pilot signals is P_p, the power P_p is unevenly distributed among the 4-stream (port) pilot signals. For example, a transmission power of the n-th stream (port) pilot is P_p_n, which amounts for the n-th pilot transmission sub-ratio of the total power of the N-stream (port) pilot signals, where n is 1, 2, 3, or 4. That is, the transmission power ratio of the n-th stream (port) pilot signal is the n-th pilot transmission sub-ratio in the first ratio of the total transmission power on the transmission resources. For example, the first sub-ratio is 40%, the second sub-ratio is 40%, the third sub-ratio is 10%, and the fourth sub-ratio is 10%. Or, for example, the first sub-ratio is 40%, the second sub-ratio is 30%, the third sub-ratio is 20%, and the fourth sub-ratio is 10%.

### Example 6

Example 6 shows a power allocation scheme for a superimposed transmission of M-stream data and N-stream (port) pilot signals, where a total transmission power of M-stream data is non-evenly allocated to each stream of data and a total transmission power of N-stream (port) pilot signals is non-evenly allocated to each pilot signal stream.

Characteristics of the above-described power allocation scheme may include a ratio of the M-stream data transmission power (P_d) to the total transmission power, i.e., a second ratio, and a ratio of the N-stream (port) pilot signal transmission power (P_p) to the total transmission power, i.e., a first ratio.

Features of the above-described power allocation scheme may also include indication information indicating non-average power allocation for the data streams. For the M-stream data, when the total power of the M-stream data is P_d, the power P_d is unevenly distributed among the M-stream data. For example, a transmission power of the m-th data stream is P_d_m, which accounts for the m-th data transmission sub-ratio of the total power of the M-stream data, where m is a positive integer from 1 to M, inclusive. In other words, a transmission power ratio of the m-th data stream is the m-th data transmission sub-ratio in the second ratio of the total transmission power on the transmission resources.

Features of the above-described power allocation scheme may also include indication information indicating non-average power allocation for the pilot signal streams. For the N-stream (port) pilot signals, when the total power of the N-stream (port) pilot signals is P_p, the power P_p is unevenly distributed among the N-stream (port) pilot signals. For example, a transmission power of the n-th pilot signal stream (port) is P_p_n, which accounts for the n-th pilot transmission sub-ratio of the total power of the N-stream (port) pilot signals, where n is a positive integer from 1 to N, inclusive. That is, the transmission power ratio of the n-th stream (port) pilot signal is the n-th pilot transmission sub-ratio in the first ratio of the total transmission power on the transmission resources.

In some embodiments, the first ratio may be: 1%, 2%, 5%, 10%, 12.5%, 15%, 16.7%, 20%, 25%, 30%, 33%, 35%, 40%, 45%, 50%, 60%, or the like.

In some embodiments, the second ratio may be: 99%, 98%, 95%, 90%, 87.5%, 85%, 83.3%, 80%, 75%, 70%, 67%, 65%, 60%, 55%, 50%, 40%, or the like.

In some embodiments, the m-th data transmission sub-ratio is: 1%, 2%, 5%, 10%, 12.5%, 15%, 16.7%, 20%, 25%, 30%, 33%, 35%, 40%, 45%, 50%, 60%, 70%, 80%, or the like.

In some embodiments, the n-th pilot transmission sub-ratio is: 1%, 2%, 5%, 10%, 12.5%, 15%, 16.7%, 20%, 25%, 30%, 33%, 35%, 40%, 45%, 50%, 60%, 70%, 80%, or the like.

Taking M as 4 and N as 2 as an example, the characteristics of the above-described power allocation scheme may include one or more of the following: a ratio of the 4-stream data transmission power (P_d) to the total transmission power is a second ratio, such as 60%; or, a ratio of the 2-stream (port) pilot signal transmission power (P_p) to the total transmission power is a first ratio, for example, 40%.

For the 4-stream data, when the total power of the 4-stream data is P_d, the power P_d is unevenly distributed among the four data streams. For example, a transmission power of the m-th data stream is P_d_m, which accounts for the m-th data transmission sub-ratio of the total power of the M-stream data, where m is a positive integer from 1 to 4, inclusive. That is, the transmission power ratio of the m-th data stream is the m-th data transmission sub-ratio in the second ratio of the total transmission power on the transmission resources. For example, the first sub-ratio is 40%, the second sub-ratio is 40%, the third sub-ratio is 10%, and the fourth sub-ratio is 10%. For another example, the first sub-ratio is 40%, the second sub-ratio is 30%, the third sub-ratio is 20%, and the fourth sub-ratio is 10%.

For 2-stream (port) pilot signals, when the total power of the 2-stream (port) pilot signals is P_p, the power P_p is unevenly distributed among the 2-stream (port) pilot signals. For example, a transmission power of the n-th stream (port) pilot is P_p_n, which amounts for the n-th pilot transmission sub-ratio of the total power of the N-stream (port) pilot signals, where n is 1 or 2. That is, the transmission power ratio of the n-th stream (port) pilot signal is the n-th pilot transmission sub-ratio in the first ratio of the total transmission power on the transmission resources. For example, the first sub-ratio is 60% and the second sub-ratio is 40%. Or, for example, the first sub-ratio is 80% and the second sub-ratio is 20%.

Taking M as 4 and N as 4 as an example, the characteristics of the above-described power allocation scheme may include one or more of the following: a ratio of the 4-stream data transmission power (P_d) to the total transmission power is a second ratio, such as 60%; or, a ratio of the 4-stream (port) pilot signal transmission power (P_p) to the total transmission power is a first ratio, for example, 40%.

For the 4-stream data, when the total power of the 4-stream data is P_d, the power P_d is unevenly distributed among the 4-stream data. For example, a transmission power of the m-th data stream is P_d_m, which accounts for the m-th data transmission sub-ratio of the total power of the M-stream data, where m is a positive integer from 1 to 4, inclusive. That is, a transmission power ratio of the m-th data stream is the m-th data transmission sub-ratio in the second ratio of the total transmission power on the transmission resources. For example, the first sub-ratio is 40%, the second sub-ratio is 40%, the third sub-ratio is 10%, and the fourth sub-ratio is 10%. For another example, the first sub-ratio is 40%, the second sub-ratio is 30%, the third sub-ratio is 20%, and the fourth sub-ratio is 10%.

For 4-stream (port) pilot signals, when a total power of the 4-stream (port) pilot signals is P_p, the power P_p is unevenly distributed among the 4-stream (port) pilot signals. For example, a transmission power of the n-th stream (port) pilot is P_p_n, which amounts for the n-th pilot transmission sub-ratio of the total power of the N-stream (port) pilot signals, where n is 1, 2, 3, or 4. That is, a transmission power ratio of the n-th stream (port) pilot signal is the n-th pilot transmission sub-ratio in the first ratio of the total transmission power on the transmission resources. For example, the first sub-ratio is 40%, the second sub-ratio is 40%, the third sub-ratio is 10%, and the fourth sub-ratio is 10%. Or, for example, the first sub-ratio is 40%, the second sub-ratio is 30%, the third sub-ratio is 20%, and the fourth sub-ratio is 10%.

### Embodiment 2

Embodiment 2 takes L-stream (port) pilot signals that need to be superimposed and transmitted with data as an example, and introduces a transmission mode of multi-stream pilot signals, such as an association between multi-stream pilot signals and transmission resources. In the embodiment of the present disclosure, at least some of the pilot signals in the L-stream pilot signals occupy different time-domain resources.

In some embodiments, the L-stream (port) pilot signals may be divided into K groups, each group including N-stream (port) pilot signals. The aforementioned K groups of pilot signals are transmitted on different time-domain resources, such as on different time-domain symbols. However, for pilot signals in each group, the power allocation scheme of data and the pilot signals on their transmission resources may adopt any of the power allocation schemes mentioned above.

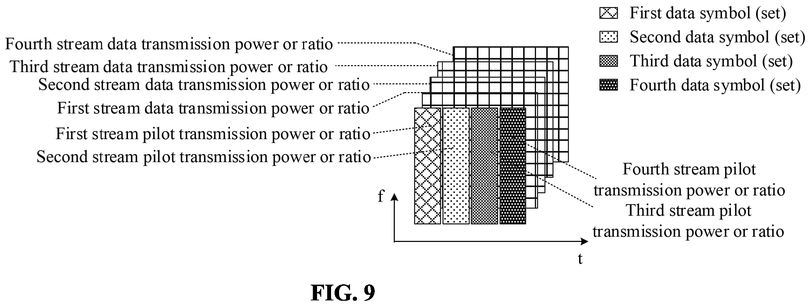

Taking 4-stream data and 4-stream (port) pilot signals that need to be transmitted as an example, 4-stream (port) pilot signals are divided into 4 groups, and each group includes 1-stream (port) pilot signal. The aforementioned four groups of pilot signals are transmitted on different time-domain resources, such as on different time-domain symbols. For example, a first group of pilot signals is transmitted on a first data symbol (set), a second group of pilot signals is transmitted on a second data symbol (set), a third group of pilot signals is transmitted on a third data symbol (set), and a fourth group of pilot signals is transmitted on a fourth data symbol (set), as shown in FIG. 9.

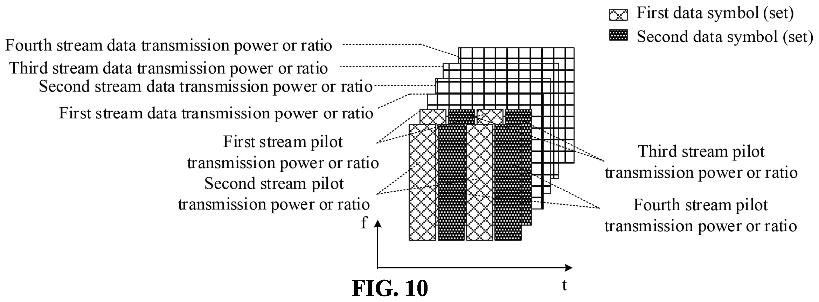

Taking 4-stream data and 4-stream (port) pilot signals that need to be transmitted as an example, 4-stream (port) pilot signals are divided into 2 groups, and each group includes 2-stream (port) pilot signals. The two groups of pilot signals are transmitted on different time-domain resources, such as on different time-domain symbols. For example, a first group of pilot signals is transmitted on a first data symbol (set), and a second group of pilot signals is transmitted on a second data symbol (set), as shown in FIG. 10.

In some embodiments, the L-stream (port) pilot signals may be divided into K groups, each group including N-stream (port) pilot signals. The K groups of pilot signals are transmitted on different frequency-domain resources, such as on different subcarriers (sets of subcarriers), or different groups of pilots are transmitted on different RBs (RB groups). However, for pilot signals in each group, the power allocation scheme of data and pilot signals on their transmission resources may adopt any of the power allocation schemes mentioned above.

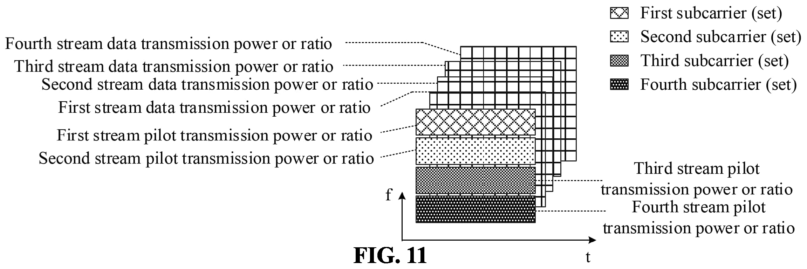

Taking 4-stream data and 4-stream (port) pilot signals that need to be transmitted as an example, the 4-stream (port) pilot signals are divided into 4 groups, and each group includes 1-stream (port) pilot signal. The aforementioned four groups of pilot signals are transmitted on different frequency-domain resources, such as on different subcarriers. For example, a first group of pilot signals is transmitted on a first subcarrier (set), a second group of pilot signals is transmitted on a second subcarrier (set), a third group of pilot signals is transmitted on a third subcarrier (set), and a fourth group of pilot signals is transmitted on a fourth subcarrier (set), as shown in FIG. 11.

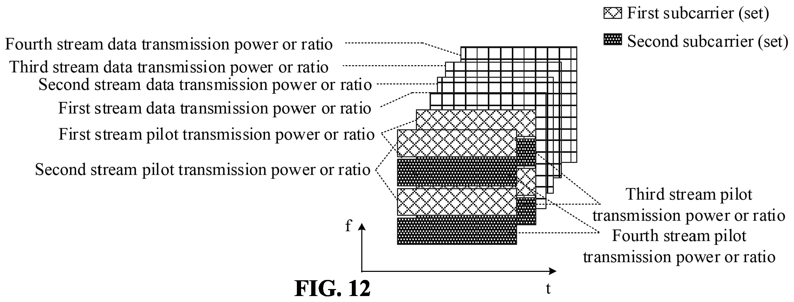

Taking 4-stream data and 4-stream (port) pilot signals that need to be transmitted as an example, 4-stream (port) pilot signals are divided into 2 groups, and each group includes 2-stream (port) pilot signals. The two groups of pilot signals are transmitted on different frequency-domain resources, such as on different subcarriers. For example, a first group of pilot signals is transmitted on a first subcarrier (set), and a second group of pilot signals is transmitted on a second subcarrier (set), as shown in FIG. 12.

In some embodiments, the L-stream (port) pilot signals may be divided into K groups, each group including N-stream (port) pilot signals. The K groups of pilot signals are transmitted on different time-domain and frequency-domain resources, such as transmitted on K groups of different time-domain and frequency-domain resources. For example, different groups of pilot signals are transmitted on different time-domain symbols and subcarriers (sets of subcarriers), or different groups of pilot signals are transmitted on different time-domain symbols and RBs (RB sets). However, for pilot signals in each group, power allocation scheme of data and pilot signals on their transmission resources may adopt any of the power allocation schemes mentioned above.

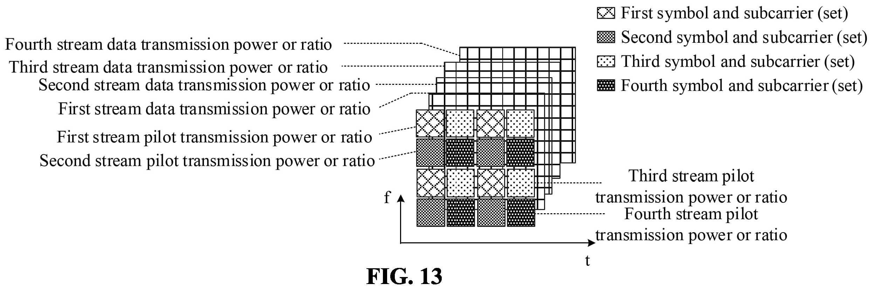

Taking 4-stream data and 4-stream (port) pilot signals that need to be transmitted as an example, 4-stream (port) pilot signals are divided into 4 groups, and each group includes 1-stream (port) pilot signal. The aforementioned four groups of pilot signals are transmitted on different time-domain and frequency-domain resources, such as on different subcarriers and different symbols. For example, a first group of pilot signals is transmitted on a first symbol and subcarrier (set), a second group of pilot signals is transmitted on a second symbol and subcarrier (set), a third group of pilot signals is transmitted on a third symbol and subcarrier (set), and a fourth group of pilot signals is transmitted on a fourth symbol and subcarrier (set), as shown in FIG. 13.

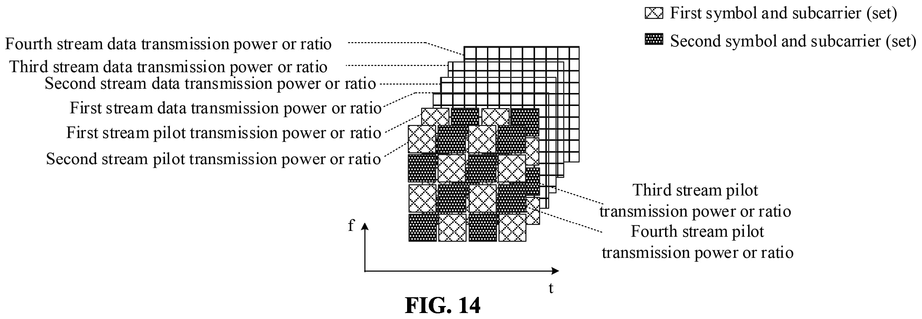

Taking 4-stream data and 4-stream (port) pilot signals that need to be transmitted as an example, 4-stream (port) pilot signals are divided into 2 groups, and each group includes 2-stream (port) pilot signals. The two groups of pilot signals are transmitted on different time and frequency domain resources, such as on different subcarriers and different symbols. For example, a first group of pilot signals is transmitted on a first symbol and a subcarrier (set), and a second group of pilot signals is transmitted on a second symbol and a subcarrier (set), as shown in FIG. 14.

Interference between data streams, mutual interference between pilot ports and mutual interference between data and pilots will greatly increase the complexity of multi-stream (port) reference signals and multi-stream data superimposed transmission and reception. From the research and experimental results of the applicant, higher pilot power and higher data transmission power can alleviate the above problems and obtain better reception effect at the receiving end. However, due to the limitation of the total transmission power on a specific transmission resource in a wireless communication system, it is necessary to consider how to make a power allocation scheme after the superimposed transmission of multi-stream (port) reference signals and multi-stream data within a limited power range.

In the embodiment of the present disclosure, a number of data streams and a number of reference signal streams (ports) on a specific transmission resource may be different. For example, a sum of the number of data streams and the number of reference signal streams (ports) on a particular transmission resource may be lower than a sum of the number of data streams to be transmitted and the number of reference signal streams (ports) to be transmitted. That is, different reference signal streams (ports) may be transmitted on different transmission resources. In this way, interference between pilot signals and interference between pilot signals and data can be reduced. At the same time, more power can be allocated to data transmission and pilot transmission on specific transmission resources, thus ensuring that a pilot transmission power of each stream can be increased as much as possible in the multi-stream pilot signals and data superposition transmission scheme, and also ensuring that a data transmission power of each stream will not be excessively lost due to the superposition transmission of pilots, thus ensuring the performance of multi-stream superposition pilot design and system gain.

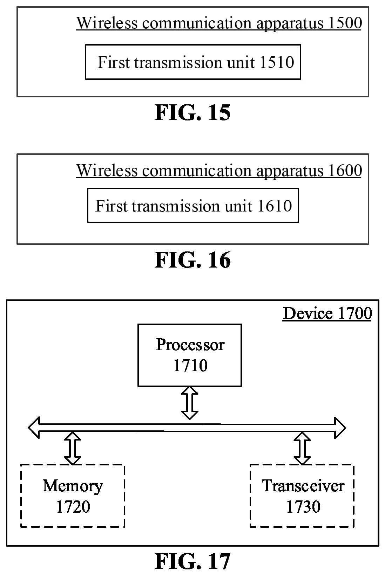

Method embodiments of the present disclosure are described in detail above with reference to FIGS. 1 to 14, and apparatus embodiments of the present disclosure are described in detail below with reference to FIGS. 15 to 17. It is to be understood that the description of the method embodiments corresponds to the description of the apparatus embodiments, and therefore, portions not described in detail may be referred to the preceding method embodiments.

FIG. 15 is a schematic diagram of a wireless communication apparatus according to an embodiment of the present disclosure, and the apparatus 1500 may be the first device described above.

Referring to FIG. 15, the apparatus 500 may include a first transmission unit 1510.

The first transmission unit 1510 is configured to transmit multi-stream pilot signals, where part or all of transmission resources occupied by pilot signals of different streams of the multi-stream pilot signals are different, and transmission resources occupied by the pilot signals are part or all of transmission resources occupied by transmission data.

In some embodiments, time-domain transmission resources and/or frequency-domain transmission resources occupied by pilot signals of different streams of the multi-stream pilot signals differ in part or in whole.

In some embodiments, the multi-stream pilot signals include a first group of pilot signals, transmission resources occupied by the first group of pilot signals are the same, and the first transmission unit is configured to transmit the first group of pilot signals based on a first ratio, the first ratio being a ratio of a transmission power of the first group of pilot signals to a total transmission power corresponding to transmission resources occupied by the first group of pilot signals.

In some embodiments, the first group of pilot signals includes a-stream pilot signals, a transmission power of each stream pilot signal of the a-stream pilot signals being one-a-th of a total transmission power of the first group of pilot signals, and a being a positive integer greater than or equal to 1.

In some embodiments, the first group of pilot signals includes a first stream pilot signal and a second stream pilot signal, and the first transmission unit is configured to: transmit the first stream pilot signal based on a first sub-ratio, the first sub-ratio being a ratio of a transmission power of the first stream pilot signal to the total transmission power of the first group of pilot signals; and transmit the second stream pilot signal based on a second sub-ratio, the second sub-ratio being a ratio of a transmission power of the second stream pilot signal to the total transmission power of the first group of pilot signals.

In some embodiments, the first ratio is one of the following: 1%, 2%, 5%, 10%, 12.5%, 15%, 16.7%, 20%, 25%, 30%, 33%, 35%, 40%, 45%, 50%, or 60%.

In some embodiments, the transmission data includes multi-stream data, the transmission resources occupied by the multi-stream pilot signals are transmission resources occupied by the multi-stream data, and the apparatus further comprises: a second transmission unit configured to transmit the multi-stream data based on a second ratio, the second ratio being a ratio of a transmission power of the multi-stream data to a total transmission power corresponding to transmission resources occupied by the multi-stream pilot signals.

In some embodiments, the multi-stream data is n-stream data, and a transmission power of each stream data of the b-stream data is one-n-th of the total transmission power of the multi-stream data, where b being a positive integer greater than or equal to 1.

In some embodiments, the multi-stream data includes a first stream data and a second stream data, and the second transmission unit is configured to: transmit the first stream data based on a third sub-ratio, the third sub-ratio being a ratio of a transmission power of the first stream data to a total transmission power of the multi-stream data; and transmit the second stream data based on a fourth sub-ratio, the fourth sub-ratio being a ratio of a transmission power of the second stream data to the total transmission power of the multi-stream data.

In some embodiments, the second ratio is one of the following: 99%, 98%, 95%, 90%, 87.5%, 85%, 83.3%, 80%, 75%, 70%, 67%, 65%, 60%, 55%, 50%, or 40%.

In some embodiments, the first sub-ratio, the second sub-ratio, the third sub-ratio, and the fourth sub-ratio are one of 1%, 2%, 5%, 10%, 12.5%, 15%, 16.7%, 20%, 25%, 30%, 33%, 35%, 40%, 45%, 50%, 60%, 70%, or 80%, respectively.

In some embodiments, the apparatus further includes an acquisition unit configured to acquire first configuration information, where the first configuration information is used to configure a transmission mode of the multi-stream pilot signals and/or a transmission mode of the transmission data.

In some embodiments, the transmission mode of the multi-stream pilot signals includes an association between the multi-stream pilot signals and transmission resources, and/or a transmission power of the multi-stream pilot signals.

In some embodiments, the multi-stream pilot signals includes a first group of pilot signals, the transmission data includes multi-stream data, and if a first resource unit is used to transmit the first group of pilot signals and the multi-stream data, the first configuration information is used to configure a transmission power of the first group of pilot signals and a transmission power of the multi-stream data in the first resource unit.

In some embodiments, the multi-stream pilot signals includes a first group of pilot signals, the transmission data includes multi-stream data, and the first configuration information is used to indicate one or more of the following: a number of pilot signal groups included in the multi-stream pilot signals; a number of pilot streams included in each of the pilot signal groups; a total transmission power of each of the pilot signal groups; a transmission power of each stream pilot signal in the pilot signal group; a number of data streams included in the multi-stream data; a total transmission power of the multi-stream data and the first group of pilot signals; a total transmission power of the multi-stream data; a transmission power of each stream of the multi-stream data; a first identifier indicating a power allocation scheme for the transmission data and/or the multi-stream pilot signals; or a second identifier indicating a transmission resource allocation scheme for the multi-stream pilot signals; where each of the pilot signal groups occupies the same transmission resources, and the transmission resources occupied by the first group of pilot signals are transmission resources occupied by the multi-stream data.

In some embodiments, the apparatus further includes: a sending unit configured to send capability information to a second device, the capability information indicating a transmission mode of the multi-stream pilot signals supported by the first device, and/or a transmission mode of the transmission data.

In some embodiments, the capability information is carried through one or more of the following: a radio resource control (RRC) message; an uplink control information (UCI) message; an uplink message during a random access procedure; a physical uplink control channel (PUCCH); a physical uplink shared channel (PUSCH); or an AI-dedicated uplink channel.

In some embodiments, the first configuration information is carried through one or more of the following: a broadcast message; a downlink message during a random access procedure; a physical downlink control channel (PDCCH); a physical downlink shared channel (PDSCH); or an Al-dedicated downlink channel.

In some embodiments, the first device is a terminal device, and the second device is a network device.

FIG. 16 is a schematic diagram of another wireless communication apparatus according to an embodiment of the present disclosure, and the apparatus 1600 may be the second device described above.

Referring to FIG. 16, the apparatus 1600 may include a first transmission unit 1610.

The first transmission unit 1610 is configured to transmit multi-stream pilot signals, where part or all of transmission resources occupied by pilot signals of different streams of the multi-stream pilot signals are different, and transmission resources occupied by the pilot signals are part or all of transmission resources occupied by the transmission data.

In some embodiments, time-domain transmission resources and/or frequency-domain transmission resources occupied by pilot signals of different streams of the multi-stream pilot signals differ in part or in whole.

In some embodiments, the multi-stream pilot signals include a first group of pilot signals, transmission resources occupied by the first group of pilot signals are the same, and the first transmission unit is configured to transmit the first group of pilot signals based on a first ratio, the first ratio being a ratio of a transmission power of the first group of pilot signals to a total transmission power corresponding to the transmission resources occupied by the first group of pilot signals.

In some embodiments, the first group of pilot signals includes a-stream pilot signals, a transmission power of each stream pilot signal of the a-stream pilot signals being one-a-th of a total transmission power of the first group of pilot signals, and a being is a positive integer greater than or equal to 1.

In some embodiments, the first group of pilot signals includes a first stream pilot signal and a second stream pilot signal, and the first transmission unit is configured to: transmit the first stream pilot signal based on a first sub-ratio, the first sub-ratio being a ratio of a transmission power of the first stream pilot signal to a total transmission power of the first group of pilot signals; and transmit the second stream pilot signal based on a second sub-ratio, the second sub-ratio being a ratio of a transmission power of the second stream pilot signal to the total transmission power of the first group of pilot signals.

In some embodiments, the first ratio is one of the following: 1%, 2%, 5%, 10%, 12.5%, 15%, 16.7%, 20%, 25%, 30%, 33%, 35%, 40%, 45%, 50%, or 60%.

In some embodiments, the transmission data includes multi-stream data, the transmission resources occupied by the multi-stream pilot signals are transmission resources occupied by the multi-stream data, and the apparatus further includes: a second transmission unit configured to transmit the multi-stream data based on a second ratio, the second ratio being a ratio of a transmission power of the multi-stream data to a total transmission power corresponding to the transmission resources occupied by the multi-stream pilot signals.

In some embodiments, the multi-stream data is b-stream data, and a transmission power of each stream data in the b-stream data is one-b-th of the total transmission power of the multi-stream data, where b is a positive integer greater than or equal to 1.

In some embodiments, the multi-stream data includes a first stream data and a second stream data, and the second transmission unit is configured to: transmit the first stream data based on a third sub-ratio, the third sub-ratio being a ratio of a transmission power of the first stream data to the total transmission power of the multi-stream data; and transmit the second stream data based on a fourth sub-ratio, the fourth sub-ratio being a ratio of a transmission power of the second stream data to the total transmission power of the multi-stream data.

In some embodiments, the second ratio is one of the following: 99%, 98%, 95%, 90%, 87.5%, 85%, 83.3%, 80%, 75%, 70%, 67%, 65%, 60%, 55%, 50%, or 40%.

In some embodiments, the first sub-ratio, the second sub-ratio, the third sub-ratio, and the fourth sub-ratio are one of 1%, 2%, 5%, 10%, 12.5%, 15%, 16.7%, 20%, 25%, 30%, 33%, 35%, 40%, 45%, 50%, 60%, 70%, or 80%, respectively.

In some embodiments, the apparatus further includes an acquisition unit configured to acquire first configuration information which is used to configure a transmission mode of the multi-stream pilot signals and/or a transmission mode of the transmission data.

In some embodiments, the transmission mode of the multi-stream pilot signals includes an association between the multi-stream pilot signals and transmission resources, and/or a transmission power of the multi-stream pilot signals.

In some embodiments, the multi-stream pilot signals include a first group of pilot signals, the transmission data includes multi-stream data, and if a first resource unit is used to transmit the first group of pilot signals and the multi-stream data, the first configuration information is used to configure a transmission power of the first group of pilot signals and a transmission power of the multi-stream data in the first resource unit.

In some embodiments, the multi-stream pilot signals include a first group of pilot signals, the transmission data comprises multi-stream data, and the first configuration information is used to indicate one or more of the following: a number of pilot signal groups included in the multi-stream pilot signals; a number of pilot streams included in each of the pilot signal groups; a total transmission power of each of the pilot signal groups; a transmission power of each stream pilot signal in the pilot signal group; a number of data streams included in the multi-stream data; a total transmission power of the multi-stream data and the first group of pilot signals; a total transmission power of the multi-stream data; a transmission power of each stream of the multi-stream data; a first identifier indicating a power allocation scheme employed by the transmission data and/or the multi-stream pilot signals; or a second identifier indicating a transmission resource allocation scheme for the multi-stream pilot signals; where the transmission resources occupied by each of the pilot signal groups are the same, and the transmission resources occupied by the first group of pilot signals are transmission resources occupied by the multi-stream data.

In some embodiments, the apparatus further includes: a sending unit configured to send capability information to a first device, the capability information indicating a transmission mode of the multi-stream pilot signals and/or a transmission mode of the transmission data supported by the second device.

In some embodiments, the capability information is carried through one or more of the following: a radio resource control (RRC) message; an uplink control information (UCI) message; an uplink message during a random access procedure; a physical uplink control channel (PUCCH); a physical uplink shared channel (PUSCH); or an Al-dedicated uplink channel.

In some embodiments, the first configuration information is carried through one or more of the following: a broadcast message; a downlink message during a random access procedure; a physical downlink control channel (PDCCH); a physical downlink shared channel (PDSCH); or an Al-dedicated downlink channel.

In some embodiments, the first device is a terminal device, and the second device is a network device.

In an optional embodiment, the transmission unit, the sending unit, and the acquisition unit described above may be a transceiver 1730, and the wireless communication apparatus 1500 and the wireless communication apparatus 1600 may further include a processor 1710 and a memory 1720, as shown in FIG. 17.

FIG. 17 is a schematic configuration diagram of a communication device according to an embodiment of the present disclosure. The dashed line in FIG. 17 indicates that a unit or module is optional. The device 1700 may be used to implement the methods described in the method embodiments described above. The device 1700 may be a chip, a first device, or a second device.

The device 1700 may include one or more processors 1710. The processor 1710 may support the device 1700 to implement the methods described in the previous method embodiments. The processor 1710 may be a general purpose processor or a special purpose processor. For example, the processor may be a central processing unit (CPU). Alternatively, the processor may be other general purpose processors, digital signal processors (DSP), application specific integrated circuits (ASICs), field programmable gate arrays (FPGAs) or other programmable logic devices, discrete gates or transistor logic devices, discrete hardware components, and the like. The general-purpose processor may be a microprocessor or the processor may be any conventional processor or the like.

The device 1700 may also include one or more memories 1720. A program is stored on the memory 1720, which can be executed by the processor 1710, causing the processor 1710 to perform the methods described in the previous method embodiments. The memory 1720 may be independent of the processor 1710 or may be integrated into the processor 1710.

The device 1700 may also include a transceiver 1730. The processor 1710 may communicate with other devices or chips through the transceiver 1730. For example, the processor 1710 may transmit (or receive) data to (or from) other devices or chips through the transceiver 1730.

Embodiments of the present disclosure also provide a computer-readable storage medium for storing a program. The computer-readable storage medium may be applied to the first device or the second device provided by the embodiment of the present disclosure, and the program causes the computer to execute the methods executed by the wireless communication device in the various embodiments of the present disclosure.

Embodiments of the present disclosure also provide a computer program product. The computer program product includes a program. The computer program product may be applied to the first device or the second device provided by the embodiment of the present disclosure, and the program causes the computer to execute the methods executed by the wireless communication device in the various embodiments of the present disclosure.

Embodiments of the present disclosure also provide a computer program. The computer program can be applied to the wireless communication device provided by the embodiment of the present disclosure, and the computer program causes the computer to execute the methods executed by the wireless communication device in the various embodiments of the present disclosure.

It is to be understood that the terms "system" and "network" may be used interchangeably in the present disclosure. In addition, the terminology used in the present disclosure is only used to explain specific embodiments of the present disclosure, and is not intended to limit the present disclosure. The terms "first", "second", "third" and "fourth" and the like in the specification and claims of the present disclosure and the accompanying drawings are used to distinguish different objects and are not used to describe a particular order. Furthermore, the terms "comprising" and "having" and any variations thereof are intended to cover a non-exclusive inclusion.

In the embodiment of the present disclosure, the "indication" may be a direct indication, an indirect indication, or an indication that there is an association. By way of example, A indicates B, which may mean that A directly indicates B, e.g., B may be acquired from A; it may also be indicated that A indirectly indicates B, for example, A indicates C, and B can be acquired from C; or, it can also be indicated that there is an association between A and B.

In the embodiment of the present disclosure, "B corresponding to A" means that B is associated with A, and B can be determined from A. However, it should also be understood that determining B from A does not mean determining B from A alone, but B may also be determined from A and/or other information.

In the embodiment of the present disclosure, the term "correspondence" may mean that there is a direct correspondence or an indirect correspondence between the two, or may mean that there is an association between the two, or may be a relationship between instruction and being instructed, configuration and being configured, or the like.

In the embodiment of the present disclosure, "pre-definition" or "pre-configuration" can be realized by pre-storing corresponding codes, tables, or other ways that can be used to indicate relevant information in a device (for example, including a terminal device and a network device), and the specific implementation method thereof is not limited in the present disclosure. For example, "predefined" may refer to defined in a protocol.

In the embodiment of the present disclosure, the "protocol" may refer to a standard protocol in the communication field, and may include, for example, an LTE protocol, an NR protocol, and related protocols applied to future communication systems, and the present disclosure is not limited thereto.

The term "and/or" in the embodiment of the present disclosure is merely an association describing the associated object, indicating that there may be three kinds of relationships, for example, A and/or B, which may mean that A exists alone, A and B exists at the same time, and B exists alone. In addition, the character "/" herein generally indicates that the associated objects before and after are in an "or" relationship.

In various embodiments of the present disclosure, the sequence numbers of the above-described processes does not mean the order of the execution order, and the execution order of each process should be determined by its function and internal logic, and should not constitute any limitation on the implementation process of the embodiments of the present disclosure.

In the several embodiments provided herein, it should be understood that the disclosed systems, apparatuses, and methods may be implemented in other ways. For example, the apparatus embodiments described above are merely illustrative. For example, the division of the units is merely a logical function division, and there may be other division methods in actual implementation. For example, multiple units or components may be combined or integrated into another system, or some features may be ignored or not implemented. Alternatively, the coupling or direct coupling or communication connection with each other shown or discussed may be through some interfaces. Indirect coupling or communication connection between devices or units may be in electrical, mechanical or other form.

The units described as separate components may or may not be physically separated, and the components shown as units may or may not be physical units, i.e., may be located in one place, or may be distributed over multiple network units. Some or all of the units may be selected according to actual needs to achieve the purpose of the solution of the present embodiments.

In addition, each functional unit in each embodiment of the present disclosure may be integrated into one processing unit, each unit may physically exist alone, or two or more units may be integrated into one unit.

In the above-described embodiments, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, processes or functions according to embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center to another website site, computer, server, or data center via wired (e.g., coaxial cable, fiber optic, digital subscriber line (DSL)) or wireless (e.g., infrared, wireless, microwave, etc.). The computer-readable storage medium may be any available medium that can be read by a computer or a data storage device such as a server, a data center, or the like that incorporates one or more available media integrations. The available medium may be a magnetic medium (e.g., a floppy disk, a hard disk, a magnetic tape), an optical medium (e.g., a digital video disc (DVD)), or a semiconductor medium (e.g., a solid state disk (SSD)), or the like.

The above are only specific embodiments of the present disclosure, but the protection scope of the present disclosure is not limited thereto, and any person familiar with the technical field can easily think of changes or substitutions within the technical scope disclosed in the present disclosure, and all of them should be covered by the protection scope of the present disclosure. Therefore, the scope of protection of the present disclosure should be determined by the scope of protection of the claims.

## Claims

1. A method for wireless communication, comprising:
transmitting, by a first device, multi-stream pilot signals, wherein part or all of transmission resources occupied by pilot signals of different streams in the multi-stream pilot signals are different, and transmission resources occupied by the pilot signals are part or all of transmission resources occupied by transmission data.

2. The method of claim 1, wherein time-domain transmission resources and/or frequency-domain transmission resources occupied by pilot signals of different streams in the multi-stream pilot signals differ in part or in whole.

3. The method of claim 1 or 2, wherein the multi-stream pilot signals comprise a first group of pilot signals, the first group of pilot signals occupying same transmission resources, and
wherein transmitting, by the first device, the multi-stream pilot signals comprises:
transmitting, by the first device, the first group of pilot signals based on a first ratio, wherein the first ratio is a ratio of a transmission power of the first group of pilot signals to a total transmission power corresponding to transmission resources occupied by the first group of pilot signals.

4. The method of claim 3, wherein the first group of pilot signals comprise a-stream pilot signals, a transmission power of each stream pilot signal of the a-stream pilot signals being one-a-th of the total transmission power of the first group of pilot signals, and a being a positive integer greater than or equal to 1.

5. The method of claim 3, wherein the first group of pilot signals comprise a first stream pilot signal and a second stream pilot signal, and
wherein transmitting, by the first device, the first group of pilot signals based on the first ratio comprises:
transmitting, by the first device, the first stream pilot signal based on a first sub-ratio, the first sub-ratio being a ratio of a transmission power of the first stream pilot signal to the total transmission power of the first group of pilot signals; and
transmitting, by the first device, the second stream pilot signal based on a second sub-ratio, the second sub-ratio being a ratio of a transmission power of the second stream pilot signal to the total transmission power of the first group of pilot signals.

6. The method of any one of claims 3 to 5, wherein the first ratio is one of the following: 1%, 2%, 5%, 10%, 12.5%, 15%, 16.7%, 20%, 25%, 30%, 33%, 35%, 40%, 45%, 50%, or 60%.

7. The method of any one of claims 1 to 6, wherein the transmission data comprises multi-stream data, and the transmission resources occupied by the multi-stream pilot signals are transmission resources occupied by the multi-stream data, and
wherein the method further comprises:
transmitting, by the first device, the multi-stream data based on a second ratio, wherein the second ratio is a ratio of a transmission power of the multi-stream data to a total transmission power corresponding to transmission resources occupied by the multi-stream pilot signals.

8. The method of claim 7, wherein the multi-stream data is b-stream data, a transmission power of each stream data in the b-stream data being one-b-th of the total transmission power of the multi-stream data, and b being a positive integer greater than or equal to 1.

9. The method of claim 7, wherein the multi-stream data comprises a first stream data and a second stream data, and
wherein transmitting, by the first device, the multi-stream data based on the second ratio comprises:
transmitting, by the first device, the first stream data based on a third sub-ratio, the third sub-ratio being a ratio of a transmission power of the first stream data to the total transmission power of the multi-stream data; and
transmitting, by the first device, the second stream data based on a fourth sub-ratio, the fourth sub-ratio being a ratio of a transmission power of the second stream data to the total transmission power of the multi-stream data.

10. The method of any one of claims 7 to 9, wherein the second ratio is one of the following: 99%, 98%, 95%, 90%, 87.5%, 85%, 83.3%, 80%, 75%, 70%, 67%, 65%, 60%, 55%, 50%, or 40%.

11. The method of claim 5 or 9, wherein the first sub-ratio, the second sub-ratio, the third sub-ratio and the fourth sub-ratio are one of 1%, 2%, 5%, 10%, 12.5%, 15%, 16.7%, 20%, 25%, 30%, 33%, 35%, 40%, 45%, 50%, 60%, 70%, or 80%, respectively.

12. The method of any one of claims 1 to 11, further comprising:
acquiring, by the first device, first configuration information, wherein the first configuration information is used to configure a transmission mode of the multi-stream pilot signals and/or a transmission mode of the transmission data.

13. The method of claim 12, wherein the transmission mode of the multi-stream pilot signals comprises:
an association between the multi-stream pilot signals and the transmission resources; and/or,
a transmission power of the multi-stream pilot signals.

14. The method of claim 12 or 13, wherein the multi-stream pilot signals comprise a first group of pilot signals, and the transmission data comprises multi-stream data, if a first resource unit is used to transmit the first group of pilot signals and the multi-stream data, the first configuration information is used to configure a transmission power of the first group of pilot signals and a transmission power of the multi-stream data in the first resource unit.

15. The method of any one of claims 12 to 14, wherein the multi-stream pilot signals comprise a first group of pilot signals, the transmission data comprises multi-stream data, and the first configuration information is used to indicate one or more of the following:
a number of pilot signal groups included in the multi-stream pilot signals;
a number of pilot streams included in each of the pilot signal groups;
a total transmission power of each of the pilot signal groups;
a transmission power of each stream pilot signal in each of the pilot signal groups;
a number of data streams included in the multi-stream data;
a total transmission power of the multi-stream data and the first group of pilot signals;
a total transmission power of the multi-stream data;
a transmission power of each stream data of the multi-stream data;
a first identifier indicating a power allocation scheme for the transmission data and/or the multi-stream pilot signals; or,
a second identifier indicating a transmission resource allocation scheme for the multi-stream pilot signals;
wherein transmission resources occupied by each of the pilot signal groups are the same, and transmission resources occupied by the first group of pilot signals are transmission resources occupied by the multi-stream data.

16. The method of any one of claims 12 to 15, further comprising:
sending, by the first device, capability information to a second device, wherein the capability information indicates a transmission mode of the multi-stream pilot signals and/or a transmission mode of the transmission data supported by the first device.

17. The method of claim 16, wherein the capability information is carried through one or more of the following:
a radio resource control (RRC) message;
an uplink control information (UCI) message;
an uplink message during a random access procedure;
a physical uplink control channel (PUCCH);
a physical uplink shared channel (PUSCH); or,
an artificial intelligence (AI)-dedicated uplink channel.

18. The method of any one of claims 12 to 17, wherein the first configuration information is carried through one or more of the following:
a broadcast message;
a downlink message during a random access procedure;
a physical downlink control channel (PDCCH);
a physical downlink shared channel (PDSCH); or,
an AI-dedicated downlink channel.

19. The method of any one of claims 16 to 18, wherein the first device is a terminal device, and the second device is a network device.

20. A method for wireless communication, comprising:
transmitting, by a second device, multi-stream pilot signals, wherein part or all of transmission resources occupied by pilot signals of different streams in the multi-stream pilot signals are different, and transmission resources occupied by the pilot signals are part or all of transmission resources occupied by transmission data.

21. The method of claim 20, wherein time-domain transmission resources and/or frequency-domain transmission resources occupied by pilot signals of different streams in the multi-stream pilot signals differ in part or in whole.

22. The method of claim 20 or 21, wherein the multi-stream pilot signals comprise a first group of pilot signals, the first group of pilot signals occupying same transmission resources, and
wherein transmitting, by the first device, the multi-stream pilot signals comprises:
transmitting, by the second device, the first group of pilot signals based on a first ratio, wherein the first ratio is a ratio of a transmission power of the first group of pilot signals to a total transmission power corresponding to transmission resources occupied by the first group of pilot signals.

23. The method of claim 22, wherein the first group of pilot signals comprise a-stream pilot signals, a transmission power of each stream pilot signal of the a-stream pilot signals being one-a-th of the total transmission power of the first group of pilot signals, and a being a positive integer greater than or equal to 1.

24. The method of claim 22, wherein the first group of pilot signals comprise a first stream pilot signal and a second stream pilot signal, and
wherein transmitting, the second device, the first group of pilot signals based on the first ratio comprises:
transmitting, by the second device, the first stream pilot signal based on a first sub-ratio, the first sub-ratio being a ratio of a transmission power of the first stream pilot signal to the total transmission power of the first group of pilot signals; and
transmitting, by the second device, the second stream pilot signal based on a second sub-ratio, the second sub-ratio being a ratio of a transmission power of the second stream pilot signal to the total transmission power of the first group of pilot signals.

25. The method of any one of claims 22 to 24, wherein the first ratio is one of the following: 1%, 2%, 5%, 10%, 12.5%, 15%, 16.7%, 20%, 25%, 30%, 33%, 35%, 40%, 45%, 50%, or 60%.

26. The method of any one of claims 20 to 25, wherein the transmission data comprises multi-stream data, and the transmission resources occupied by the multi-stream pilot signals are transmission resources occupied by the multi-stream data; and
wherein the method further comprises:
transmitting, by the second device, the multi-stream data based on a second ratio, wherein the second ratio is a ratio of a transmission power of the multi-stream data to a total transmission power corresponding to transmission resources occupied by the multi-stream pilot signals.

27. The method of claim 26, wherein the multi-stream data is b-stream data, a transmission power of each stream data of the b-stream data being one-b-th of the total transmission power of the multi-stream data, and b being a positive integer greater than or equal to 1.

28. The method of claim 26, wherein the multi-stream data comprises a first stream data and a second stream data, and
wherein transmitting, by the second device, the multi-stream data based on the second ratio comprises:
transmitting, by the second device, the first stream data based on a third sub-ratio, the third sub-ratio being a ratio of a transmission power of the first stream data to the total transmission power of the multi-stream data; and
transmitting, by the second device, the second stream data based on a fourth sub-ratio, the fourth sub-ratio being a ratio of a transmission power of the second stream data to the total transmission power of the multi-stream data.

29. The method of any one of claims 26 to 28, wherein the second ratio is one of the following: 99%, 98%, 95%, 90%, 87.5%, 85%, 83.3%, 80%, 75%, 70%, 67%, 65%, 60%, 55%, 50%, or 40%.

30. The method of claim 24 or 29, wherein the first sub-ratio, the second sub-ratio, the third sub-ratio and the fourth sub-ratio are one of 1%, 2%, 5%, 10%, 12.5%, 15%, 16.7%, 20%, 25%, 30%, 33%, 35%, 40%, 45%, 50%, 60%, 70%, or 80%, respectively.

31. The method of any one of claims 20 to 30, further comprising:
acquiring, by the second device, first configuration information, wherein the first configuration information is used to configure a transmission mode of the multi-stream pilot signals and/or a transmission mode of the transmission data.

32. The method of claim 31, wherein the transmission mode of the multi-stream pilot signals comprises:
an association between the multi-stream pilot signals and the transmission resources; and/or,
a transmission power of the multi-stream pilot signals.

33. The method of claim 31 or 32, wherein the multi-stream pilot signals comprise a first group of pilot signals, the transmission data includes multi-stream data, if a first resource unit is used to transmit the first group of pilot signals and the multi-stream data, the first configuration information is used to configure a transmission power of the first group of pilot signals and a transmission power of the multi-stream data in the first resource unit.

34. The method of any one of claims 31 to 33, wherein the multi-stream pilot signals comprise a first group of pilot signals, the transmission data comprises multi-stream data, and the first configuration information is used to indicate one or more of the following:
a number of pilot signal groups included in the multi-stream pilot signals;
a number of pilot streams included in each of the pilot signal groups;
a total transmission power of each of the pilot signal groups;
a transmission power of each stream pilot signal in each of the pilot signal groups;
a number of data streams included in the multi-stream data;
a total transmission power of the multi-stream data and the first group of pilot signals;
a total transmission power of the multi-stream data;
a transmission power of each stream data of the multi-stream data;
a first identifier indicating a power allocation scheme for the transmission data and/or the multi-stream pilot signals; or,
a second identifier indicating a transmission resource allocation scheme for the multi-stream pilot signals;
wherein transmission resources occupied by each of the pilot signal groups are the same, and transmission resources occupied by the first group of pilot signals are transmission resources occupied by the multi-stream data.

35. The method of any one of claims 31 to 34, further comprising:
sending, by the second device, capability information to a first device, wherein the capability information indicates a transmission mode of the multi-stream pilot signals and/or a transmission mode of the transmission data supported by the second device.

36. The method of claim 35, wherein the capability information is carried through one or more of the following:
a radio resource control (RRC) message;
an uplink control information (UCI) message;
an uplink message during a random access procedure;
a physical uplink control channel (PUCCH);
a physical uplink shared channel (PUSCH); or,
an artificial intelligence (AI)-dedicated uplink channel.

37. The method of any one of claims 31 to 36, wherein the first configuration information is carried through one or more of the following:
a broadcast message;
a downlink message during a random access procedure;
a physical downlink control channel (PDCCH);
a physical downlink shared channel (PDSCH); or
an AI-dedicated downlink channel.

38. The method of any one of claims 35 to 37, wherein the first device is a terminal device, and the second device is a network device.

39. An apparatus for wireless communication, wherein the apparatus is a first device and comprises:
a first transmission unit, configured to transmit multi-stream pilot signals, wherein part or all of transmission resources occupied by pilot signals of different streams in the multi-stream pilot signals are different, and transmission resources occupied by the pilot signals are part or all of transmission resources occupied by transmission data.

40. The apparatus of claim 39, wherein time-domain transmission resources and/or frequency-domain transmission resources occupied by pilot signals of different streams in the multi-stream pilot signals differ in part or in whole.

41. The apparatus of claim 39 or 40, wherein the multi-stream pilot signals comprise a first group of pilot signals, the first group of pilot signals occupying same transmission resources, and the first transmission unit is configured to:
transmit the first group of pilot signals based on a first ratio, wherein the first ratio is a ratio of a transmission power of the first group of pilot signals to a total transmission power corresponding to transmission resources occupied by the first group of pilot signals.

42. The apparatus of claim 41, wherein the first group of pilot signals comprise a-stream pilot signals, a transmission power of each stream pilot signal of the a-stream pilot signals being one-a-th of the total transmission power of the first group of pilot signals, and a being a positive integer greater than or equal to 1.

43. The apparatus of claim 41, wherein the first group of pilot signals comprise a first stream pilot signal and a second stream pilot signal, and the first transmission unit is configured to:
transmit the first stream pilot signal based on a first sub-ratio, the first sub-ratio being a ratio of a transmission power of the first stream pilot signal to the total transmission power of the first group of pilot signals; and
transmit the second stream pilot signal based on a second sub-ratio, the second sub-ratio being a ratio of a transmission power of the second stream pilot signal to the total transmission power of the first group of pilot signals.

44. The apparatus of any one of claims 41 to 43, wherein the first ratio is one of the following: 1%, 2%, 5%, 10%, 12.5%, 15%, 16.7%, 20%, 25%, 30%, 33%, 35%, 40%, 45%, 50%, or 60%.

45. The apparatus of any one of claims 39 to 44, wherein the transmission data comprises multi-stream data, the transmission resources occupied by the multi-stream pilot signals are transmission resources occupied by the multi-stream data, and the apparatus further comprises:
a second transmission unit, configured to transmit the multi-stream data based on a second ratio, wherein the second ratio is a ratio of a transmission power of the multi-stream data to a total transmission power corresponding to transmission resources occupied by the multi-stream pilot signals.

46. The apparatus of claim 45, wherein the multi-stream data is b-stream data, a transmission power of each stream data of the b-stream data being one-b-th of the total transmission power of the multi-stream data, and b being a positive integer greater than or equal to 1.

47. The apparatus of claim 45, wherein the multi-stream data comprises a first stream data and a second stream data, and the second transmission unit is configured to:
transmit the first stream data based on a third sub-ratio, the third sub-ratio being a ratio of a transmission power of the first stream data to the total transmission power of the multi-stream data; and
transmit the second stream data based on a fourth sub-ratio, the fourth sub-ratio being a ratio of a transmission power of the second stream data to the total transmission power of the multi-stream data.

48. The apparatus of any one of claims 45 to 47, wherein the second ratio is one of the following: 99%, 98%, 95%, 90%, 87.5%, 85%, 83.3%, 80%, 75%, 70%, 67%, 65%, 60%, 55%, 50%, or 40%.

49. The apparatus of claim 43 or 48, wherein the first sub-ratio, the second sub-ratio, the third sub-ratio and the fourth sub-ratio are one of 1%, 2%, 5%, 10%, 12.5%, 15%, 16.7%, 20%, 25%, 30%, 33%, 35%, 40%, 45%, 50%, 60%, 70%, or 80%, respectively.

50. The apparatus of any one of claims 39 to 49, further comprising:
an acquisition unit, configured to acquire first configuration information, wherein the first configuration information is used to configure a transmission mode of the multi-stream pilot signals and/or a transmission mode of the transmission data.

51. The apparatus of claim 50, wherein the transmission mode of the multi-stream pilot signals comprises:
an association between the multi-stream pilot signals and the transmission resources; and/or,
a transmission power of the multi-stream pilot signals.

52. The apparatus of claim 50 or 51, wherein the multi-stream pilot signals comprise a first group of pilot signals, the transmission data includes multi-stream data, and the first configuration information is used to configure a transmission power of the first group of pilot signals and a transmission power of the multi-stream data in a first resource unit if the first resource unit is used to transmit the first group of pilot signals and the multi-stream data.

53. The apparatus of any one of claims 50 to 52, wherein the multi-stream pilot signals comprise a first group of pilot signals, the transmission data comprises multi-stream data, and the first configuration information is used to indicate one or more of the following:
a number of pilot signal groups included in the multi-stream pilot signals;
a number of pilot streams included in each of the pilot signal groups;
a total transmission power of each of the pilot signal groups;
a transmission power of each stream pilot signal in each of the pilot signal groups;
a number of data streams included in the multi-stream data;
a total transmission power of the multi-stream data and the first group of pilot signals;
a total transmission power of the multi-stream data;
a transmission power of each stream data of the multi-stream data;
a first identifier indicating a power allocation scheme for the transmission data and/or the multi-stream pilot signals; or,
a second identifier indicating a transmission resource allocation scheme for the multi-stream pilot signals;
wherein transmission resources occupied by each of the pilot signal groups are the same, and transmission resources occupied by the first group of pilot signals are transmission resources occupied by the multi-stream data.

54. The apparatus of any one of claims 50 to 53, further comprising:
a sending unit, configured to send capability information to a second device, wherein the capability information indicates a transmission mode of the multi-stream pilot signals and/or a transmission mode of the transmission data supported by the first device.

55. The apparatus of claim 54, wherein the capability information is carried through one or more of the following:
a radio resource control (RRC) message;
an uplink control information (UCI) message;
an uplink message during a random access procedure;
a physical uplink control channel (PUCCH);
a physical uplink shared channel (PUSCH); or,
an artificial intelligence (AI)-dedicated uplink channel.

56. The apparatus of any one of claims 50 to 55, wherein the first configuration information is carried through one or more of the following:
a broadcast message;
a downlink message during a random access procedure;
a physical downlink control channel (PDCCH);
a physical downlink shared channel (PDSCH); or,
an AI-dedicated downlink channel.

57. The apparatus of any one of claims 54 to 56, wherein the first device is a terminal device, and the second device is a network device.

58. An apparatus for wireless communication, wherein the apparatus is a second device and comprises:
a first transmission unit, configured to transmit multi-stream pilot signals, wherein part or all of transmission resources occupied by pilot signals of different streams in the multi-stream pilot signals are different, and transmission resources occupied by the pilot signals are part or all of transmission resources occupied by transmission data.

59. The apparatus of claim 58, wherein time-domain transmission resources and/or frequency-domain transmission resources occupied by pilot signals of different streams in the multi-stream pilot signals differ in part or in whole.

60. The apparatus of claim 58 or 59, wherein the multi-stream pilot signals comprise a first group of pilot signals, the first group of pilot signals occupying same transmission resources, and the first transmission unit is configured to:
transmit the first group of pilot signals based on a first ratio, wherein the first ratio is a ratio of a transmission power of the first group of pilot signals to a total transmission power corresponding to transmission resources occupied by the first group of pilot signals.

61. The apparatus of claim 60, wherein the first group of pilot signals comprise a-stream pilot signals, a transmission power of each stream pilot signal of the a-stream pilot signals being one-a-th of the total transmission power of the first group of pilot signals, and a being a positive integer greater than or equal to 1.

62. The apparatus of claim 60, wherein the first group of pilot signals comprise a first stream pilot signal and a second stream pilot signal, and the first transmission unit is configured to:
transmit the first stream pilot signal based on a first sub-ratio, the first sub-ratio being a ratio of a transmission power of the first stream pilot signal to the total transmission power of the first group of pilot signals;
transmit the second stream pilot signal based on a second sub-ratio, the second sub-ratio being a ratio of a transmission power of the second stream pilot signal to the total transmission power of the first group of pilot signals.

63. The apparatus of any one of claims 60 to 62, wherein the first ratio is one of the following: 1%, 2%, 5%, 10%, 12.5%, 15%, 16.7%, 20%, 25%, 30%, 33%, 35%, 40%, 45%, 50%, or 60%.

64. The apparatus of any one of claims 58 to 63, wherein the transmission data comprises multi-stream data, the transmission resources occupied by the multi-stream pilot signals are transmission resources occupied by the multi-stream data, and the apparatus further comprises:
a second transmission unit, configured to transmit the multi-stream data based on a second ratio, wherein the second ratio is a ratio of a transmission power of the multi-stream data to a total transmission power corresponding to transmission resources occupied by the multi-stream pilot signals.

65. The apparatus of claim 64, wherein the multi-stream data is b-stream data, a transmission power of each stream data of the b-stream data being one-b-th of the total transmission power of the multi-stream data, and b being a positive integer greater than or equal to 1.

66. The apparatus of claim 64, wherein the multi-stream data comprises a first stream data and a second stream data, and the second transmission unit is configured to:
transmit the first stream data based on a third sub-ratio, the third sub-ratio being a ratio of a transmission power of the first stream data to the total transmission power of the multi-stream data; and
transmit the second stream data based on a fourth sub-ratio, the fourth sub-ratio being a ratio of a transmission power of the second stream data to the total transmission power of the multi-stream data.

67. The apparatus of any one of claims 64 to 66, wherein the second ratio is one of the following: 99%, 98%, 95%, 90%, 87.5%, 85%, 83.3%, 80%, 75%, 70%, 67%, 65%, 60%, 55%, 50%, or 40%.

68. The apparatus of claim 62 or 66, wherein the first sub-ratio, the second sub-ratio, the third sub-ratio and the fourth sub-ratio are one of 1%, 2%, 5%, 10%, 12.5%, 15%, 16.7%, 20%, 25%, 30%, 33%, 35%, 40%, 45%, 50%, 60%, 70%, or 80%, respectively.

69. The apparatus of any one of claims 58 to 68, further comprising:
an acquisition unit, configured to acquire first configuration information, wherein the first configuration information is used to configure a transmission mode of the multi-stream pilot signals and/or a transmission mode of the transmission data.

70. The apparatus of claim 69, wherein the transmission mode of the multi-stream pilot signals comprises:
an association between the multi-stream pilot signals and transmission resources; and/or,
a transmission power of the multi-stream pilot signals.

71. The apparatus of claim 69 or 70, wherein the multi-stream pilot signals comprise a first group of pilot signals, the transmission data includes multi-stream data, and the first configuration information is used to configure a transmission power of the first group of pilot signals and a transmission power of the multi-stream data in a first resource unit if the first resource unit is used to transmit the first group of pilot signals and the multi-stream data.

72. The apparatus of any one of claims 69 to 71, wherein the multi-stream pilot signals comprise a first group of pilot signals, the transmission data comprises multi-stream data, and the first configuration information is used to indicate one or more of the following:
a number of pilot signal groups included in the multi-stream pilot signals;
a number of pilot streams included in each of the pilot signal groups;
a total transmission power of each of the pilot signal groups;
a transmission power of each stream pilot signal in each of the pilot signal groups;
a number of data streams included in the multi-stream data;
a total transmission power of the multi-stream data and the first group of pilot signals;
a total transmission power of the multi-stream data;
a transmission power of each stream data of the multi-stream data;
a first identifier indicating a power allocation scheme for the transmission data and/or the multi-stream pilot signals; or,
a second identifier indicating a transmission resource allocation scheme for the multi-stream pilot signals;
wherein transmission resources occupied by each of the pilot signal groups are the same, and transmission resources occupied by the first group of pilot signals are transmission resources occupied by the multi-stream data.

73. The apparatus of any one of claims 69 to 72, further comprising:
a sending unit, configured to send capability information to a first device, wherein the capability information indicates a transmission mode of the multi-stream pilot signals and/or a transmission mode of the transmission data supported by the second device.

74. The apparatus of claim 73, wherein the capability information is carried through one or more of the following:
a radio resource control (RRC) message;
an uplink control information (UCI) message;
an uplink message during a random access procedure;
a physical uplink control channel (PUCCH);
a physical uplink shared channel (PUSCH); or,
an artificial intelligence (AI)-dedicated uplink channel.

75. The apparatus of any one of claims 69 to 74, wherein the first configuration information is carried through one or more of the following:
a broadcast message;
a downlink message during a random access procedure;
a physical downlink control channel (PDCCH);
a physical downlink shared channel (PDSCH); or,
an AI-dedicated downlink channel.

76. The apparatus of any one of claims 73 to 75, wherein the first device is a terminal device, and the second device is a network device.

77. A device for wireless communication, comprising:
a processor; and
a memory for storing a program,
wherein the processor is configured to invoke a program in the memory to perform:
the method of any one of claims 1 to 19; or
the method of any one of claims 20 to 38.

78. A device for wireless communication, comprising a processor for invoking a program from a memory to perform the method of any one of claims 1 to 19 or 20 to 38.

79. A chip, comprising a processor for invoking a program from a memory to cause a device on which the chip is mounted to perform the method of any one of claims 1 to 19 or 20 to 38.

80. A computer-readable storage medium having stored thereon a program that causes a computer to perform the method of any one of claims 1 to 19 or 20 to 38.

81. A computer program product comprising a program that causes a computer to perform the method of any one of claims 1 to 19 or 20 to 38.

82. A computer program causing a computer to perform the method of any one of claims 1 to 19 or 20 to 38.
